# EUROPEAN PATENT APPLICATION

(11) **EP 3 982 221 A1**
(43) Date of publication of application: **13.04.2022**
(21) Application number: 20201351.2
(22) Date of filing: 12.10.2020
(51) Int. Cl.: G05B 19/418, G06F 30/30, H05K 3/00

(54) **COUPON DESIGN SYSTEM FOR SUPPORTING QUALITY TESTING OF COMPONENT CARRIERS**

(71) Applicant: AT & S Austria Technologie & Systemtechnik Aktiengesellschaft, 8700 Leoben-Hinterberg (AT)
(72) Inventor: Schutting, Günther, 8605 Kapfenberg (AT); Gruber, Irene, 8793 Trofaiach (AT); Spitzer, Robert, 8680 Mürzzuschlag (AT); Pacher, Gernot, 8750 Judenburg (AT); Schwaiger, Jürgen, 8621 Thörl (AT); Titjung, Florian, 8605 Kapfenberg (AT)
(74) Representative: Dilg, Haeusler, Schindelmann Patentanwaltsgesellschaft mbH

(57) **Abstract**

A computer-implemented system (270) for designing a coupon (200) for carrying out a quality test concerning coupon-related component carriers (256), wherein the system (270) comprises a compliance input unit (272) configured for receiving compliance input data indicative of compliance conditions to be fulfilled by the coupon (200) to be designed, a product input unit (274) configured for receiving product input data indicative of properties of component carriers (256) to be manufactured to which the coupon (200) to be designed is related, and a coupon design unit (276) configured for designing the coupon (200) so as to fulfil said compliance conditions and/or said properties of the component carriers (256).

## Description

The invention relates to a computer-implemented system for and method of designing a coupon for carrying out a quality test concerning coupon-related component carriers, a method of carrying out a quality test concerning component carriers, a computer-readable medium, and a program element.

In the context of growing product functionalities of component carriers equipped with one or more electronic components and increasing miniaturization of such electronic components as well as a rising number of electronic components to be mounted on the component carriers such as printed circuit boards, increasingly more powerful array-like components or packages having several electronic components are being employed, which have a plurality of contacts or connections, with ever smaller spacing between these contacts. At the same time, component carriers shall be mechanically robust and electrically reliable so as to be operable even under harsh conditions.

Cross-sectioning is a technique used to characterize materials, perform a failure analysis and expose an internal structure of a component carrier such as a printed circuit board (PCB). Cross-sectioning may involve mounting a target segment of the PCB in a potting material to obtain support and protect the PCB in a subsequent grinding and polishing process. The mounted PCB is carefully ground and then polished using progressively finer media to reach a target examination plane of interest. The PCB prepared in this way may then be inspected by a user, for instance under an optical microscope or a scanning electron microscope (SEM). Flat grinding is another technique for exposing an interior of a component carrier for inspection by a user.

Preparing and testing cross-sections of component carriers, flat ground component carriers, and related physical bodies is conventionally carried out manually by engineers. This holds for different types of microsections such as cross-sections and flat sections. However, this involves a high effort and a limited precision in terms of quality testing and may be critical concerning tough requirements regarding throughput on an industrial scale.

It is an object of the invention to assess quality of component carriers with high reliability, high throughput and reasonable effort.

In order to achieve the object defined above, a computer-implemented system for and method of designing a coupon for carrying out a quality test concerning coupon-related component carriers, a method of carrying out a quality test concerning component carriers, a computer-readable medium, and a program element according to the independent claims are provided.

According to an exemplary embodiment of the invention, a computer-implemented system for designing a coupon for carrying out a quality test concerning coupon-related component carriers is provided, wherein the system comprises a compliance input unit configured for receiving compliance input data indicative of compliance conditions to be fulfilled by the coupon to be designed, a product input unit configured for receiving product input data indicative of properties of component carriers to be manufactured to which the coupon to be designed is related, and a coupon design unit configured for designing the coupon so as to fulfil said compliance conditions and/or said properties of the component carriers.

According to another exemplary embodiment of the invention, a computer-implemented method of designing a coupon for carrying out a quality test concerning coupon-related component carriers is provided, wherein the method comprises receiving compliance input data indicative of compliance conditions to be fulfilled by the coupon to be designed, receiving product input data indicative of properties of component carriers to be manufactured to which the coupon to be designed is related, and designing the coupon so as to fulfil said compliance conditions and/or said properties of the component carriers.

According to still another exemplary embodiment of the invention, a method of carrying out a quality test concerning component carriers is provided, wherein the method comprises carrying out a method having the above-mentioned features for designing a coupon for carrying out the quality test concerning the coupon-related component carriers, processing a central portion of a panel for manufacturing the component carriers, processing an edge portion of the panel for manufacturing the coupon designed by the method having the above-mentioned features, and testing the coupon for carrying out the quality test concerning the component carriers.

According to still another exemplary embodiment of the invention, a program element (for instance a software routine, in source code or in executable code) is provided, which, when being executed by a processor (such as a microprocessor or a CPU), is adapted to control and/or carry out a method having the above mentioned features.

According to yet another exemplary embodiment of the invention, a computer-readable medium (for instance a CD, a DVD, a USB stick, an SD card, a floppy disk or a hard disk, or any other (in particular also smaller) storage medium) is provided, in which a computer program is stored which, when being executed by a processor (such as a microprocessor or a CPU), is adapted to control and/or carry out a method having the above mentioned featu res.

Data processing which may be performed according to embodiments of the invention can be realized by a computer program, that is by software, or by using one or more special electronic optimization circuits, that is in hardware, or in hybrid form, that is by means of software components and hardware components.

In the context of the present application, the term "component carrier" may particularly denote any support structure which is capable of accommodating one or more components thereon and/or therein for providing mechanical support and/or electrical connectivity and/or optical connectivity and/or thermal connectivity. In other words, a component carrier may be configured as a mechanical and/or electronic carrier for components. In particular, a component carrier may be one of a printed circuit board, an organic interposer, and an IC (integrated circuit) substrate. A component carrier may also be a hybrid board combining different ones of the above-mentioned types of component carriers.

In the context of the present application, the term "component carrier structure" may particularly denote a thin sheet handled and processed during and/or after manufacturing component carriers, for instance a panel, an array or a component carrier itself. Thus, a component carrier structure may particularly denote a panel comprising multiple connected preforms of component carriers, an array (such as a quarter panel) comprising multiple connected preforms of component carriers, a preform of a component carrier (i.e. a component carrier which is not yet readily manufactured), or a readily manufactured component carrier (such as a printed circuit board (PCB) or an integrated circuit (IC) substrate). However, it is also possible that the component carrier structure is a coupon.

In the context of the present application, the term "coupon" (or test coupon) may particularly denote a component carrier body (such as a printed circuit board like body) which may be used to test the quality of a component carrier (in particular printed circuit board) fabrication process. Test coupons may be fabricated on the same panel as the component carriers (such as printed circuit boards), for instance at edges of the panel or even forming part of the component carriers or a region between component carriers. Coupons may then be inspected in terms of a quality test, for example to ensure proper layer alignment, electrical connectivity, etc. A coupon may also be cross sectioned to inspect internal structures. A coupon may be designed to include electrically conductive traces and vertical through connections (such as vias) with the same dimensions and structures as those of the use-type component carriers. For example, a coupon may be a strip-shaped plate (for example having dimensions of 23 x 3.5 cm²; in a modular configuration of a coupon comprising multiple individually usable coupon sections, such coupon sections may also have significantly smaller dimensions such as for example 3 x 1 cm²). Descriptively speaking, structural features of a coupon shall serve as a mirror and as a fingerprint of structural features of corresponding component carriers (such as PCBs) of the same panel. Descriptively speaking, the mirror function makes a duplicate of everything that is supposed to be checked, and the fingerprint function shows the uniqueness and displays the individual characteristics of the processes that the structural features were subjected to during manufacturing.

In the context of the present application, the term "quality test" may particularly denote an assessment of the quality of a component carrier structure by analyzing a characteristic of one or more pre-defined test targets thereof. In such a quality test, it may be tested whether or not one or more such characteristic features of the component carrier structure meet(s) one or more quality criteria. Such quality criteria may include one or more qualitative quality criteria (such as presence or absence of a delamination of a layer structure as a qualitative error pattern or failure scenario) and/or one or more quantitative quality criteria (such as a thickness of a patterned copper layer in relation to a pre-defined range of acceptable thicknesses). Examples for determinable quality defects of component carrier structures are artefacts in terms of drill holes, hair inclusions, solder resist effects, short-circuiting between electrically conductive traces to be separated, etc. For example, a quality test of the component carrier structure may be carried out to check whether the component carrier structure complies with an industrial norm (for example IPC 6012, IPC-A-600, IPC-2221, etc.).

In the context of the present application, the term "coupon for carrying out a quality test concerning related component carriers" may particularly denote that the mentioned component carriers are correlated with the coupon in terms of a common manufacturing process. In particular, said component carriers may be manufactured simultaneously with the manufacture of the coupon. The coupon and the related component carriers may form part of the same panel. Hence, it can be reasonably assumed that a quality issue of the coupon corresponds to a quality issue of the related component carriers, and that a coupon passing a quality test allows the conclusion that the related component carriers also comply with requirements of said quality test. For instance, a defect of at least one test target to be evaluated during the quality test comprises at least one of the group consisting of a diameter of a drill hole outside of a range of acceptable values, a distance between adjacent drill holes outside of a range of acceptable values, a width of an electrically conductive trace of an electrically conductive layer structure outside of a range of acceptable values, a distance between adjacent electrically conductive traces of an electrically conductive layer structure outside of a range of acceptable values, a thickness of a layer structure outside of a range of acceptable values, a non-planarity of a layer structure, delamination of a layer structure, and any deviation of a feature of a printed circuit board-type component carrier structure from a pre-defined specification. For instance, one or more of the criteria mentioned in chapter "3.6 Structural Integrity" of IPC-6012D (version: September 2015) may be considered for evaluating a defect.

In the context of the present application, the term "designing a coupon" may particularly denote a computer-based or processor-supported process of determining a data set which, when input in a component carrier manufacturing apparatus, includes all information needed for physically creating a coupon with properties defined by such a data set. Thus, a coupon design may relate to the determination of a number of parameters which define the properties of the coupon taking into account a received input in terms of desired product properties and/or compliance conditions.

In the context of the present application, the term "compliance conditions to be fulfilled by the coupon to be designed" may particularly denote a set of constraints which a coupon to be designed should fulfil. Such compliance conditions may be conditions defined by a user as target conditions for the coupon to be designed. For instance, a user may define a maximum space consumption of a coupon in a panel. Furthermore, compliance conditions may also relate to compliance with an industrial standard (for example IPC-6012 and IPC-2221).

In the context of the present application, the term "properties of component carriers to be manufactured" may particularly denote attributes of component carriers to be manufactured together with a coupon to be designed on a common panel. Such properties may include qualitative properties (for instance that the component carriers are PCBs or IC substrates) and/or quantitative properties (such as parameter values). For example, such attributes may comprise material properties (for instance a resin of electrically insulating layer structures thereof), structural dimensions (for instance a diameter of a drill hole), etc. Such properties of the component carriers may be reflected in the coupon design as well.

According to an exemplary embodiment of the invention, a system for designing a coupon (such as a printed circuit board coupon), preferably for a fully automated system of testing quality of related component carriers (in particular printed circuit boards of the same panel as the coupon), is provided. A coupon design system according to an exemplary embodiment may advantageously consider input boundary conditions relating to both compliance conditions to be fulfilled by the coupon to be designed as well as properties of component carriers to be manufactured on panel-level together with a coupon to be designed and which shall be reflected by the coupon design as well. Instead of using a standardized coupon for a quality test of related component carriers, an exemplary embodiment of the invention makes it possible to design a coupon which can be specifically adapted to the needs of a specific application or product (for instance taking into account specific drill hole dimensions desired for the product) while simultaneously meeting compliance conditions (such as those defined by an industrial standard). Hence, without requiring specific skills of a user, the user may be enabled to design an application-specific coupon by means of a flexible tool. The latter only requires a user input or selection in terms of product properties and compliance conditions and may then create a corresponding coupon, for instance by providing a data set including all information for physically producing such a coupon simultaneously with the manufacture of related component carriers. While increasing the freedom of design for an engineer in terms of coupon definition, it may be simultaneously ensured that the user-specific coupon also fulfils additionally defined boundary conditions, such as compliance with industrial standard. Preferably, the designed coupon may also comply with requirements concerning a fully automated quality test. Designing a coupon and subsequently manufacturing such a coupon may allow to execute a quality test using such a coupon with high reliability, high throughput and reasonable effort. Advantageously, the coupon design may optionally include one or more additional features improving handling during processing and/or analysis of the coupon.

In the following, further exemplary embodiments of the system, the methods, the computer-readable medium, and the program element will be explained.

In an embodiment, the system comprises an output unit configured for providing output data indicative of the designed coupon fulfilling said compliance conditions and/or said properties of the component carriers. At the output unit, a data set may be provided which describes the created or designed coupon and which may include all information or instructions needed for manufacturing that coupon.

In an embodiment, the compliance input unit is configured for receiving compliance input data indicative of compliance conditions in terms of at least one industrial standard, in particular at least one of IPC-2221 (relating to design of coupons), IPC-6012 (relating to quality test and evaluation) and IPC-A-600 (relating as well to quality test and evaluation) (each of the mentioned industrial standards in particular in the latest version in force at the priority date of the present patent application). Thus, the coupon design may be rendered standard-conformal.

In an embodiment, the compliance input unit is configured for receiving compliance input data indicative of user-defined compliance conditions. Hence, freely definable user requirements may be considered as well when designing the coupon. This increases the flexibility of coupon design.

In an embodiment, the system comprises a collision determining unit configured for determining a collision between compliance conditions in terms of at least one industrial standard and user-defined compliance conditions. If for instance an industrial standard requires a 2 mm diameter drill hole while the user-defined properties call for a 1 mm diameter drill hole the collision determining unit may identify such a contradiction and may deal with it for instance by applying a pre-defined fixed priority rule or by asking a user to indicate whether standard-conformity or the user-definition shall prevail.

In an embodiment, the collision determining unit is configured for, upon determining said collision, requesting a user to decide whether the compliance conditions in terms of the at least one industrial standard or the user-defined compliance conditions shall have precedence for designing the coupon. Thus, a user can, in the event of the collision, decide depending on the particularities of the specific application whether the industrial standards or the user definition prevails for the coupon design.

In another embodiment, the collision determining unit is configured for, upon determining said collision, designing the coupon in accordance with pre-defined precedence rules, in particular pre-defined precedence rules according to which the at least one industrial standard or the user-defined compliance conditions shall have precedence for designing the coupon. In particular, the user-defined compliance conditions may prevail in accordance with the pre-defined precedence rules.

In an embodiment, the collision determining unit is configured for, upon determining said collision, proposing modified compliance rules for designing the coupon, in particular modified compliance rules removing the collision between the compliance conditions in terms of the at least one industrial standard and the user-defined compliance conditions. If for instance an industrial standard requires a 2 mm diameter drill hole while the user-defined properties require a 1 mm diameter drill hole, the system may propose a 1.5 mm diameter drill hole as modified compliance rule.

In an embodiment, the product input unit is configured for receiving product input data indicative of at least one of the group consisting of a diameter of a bore hole, a distance between adjacent bore holes, and a thickness of a layer structure, of the component carriers to be manufactured. Other properties of the component carriers to be manufactured on the same panel as a coupon being physically created in accordance with the results of the coupon design may be considered as well.

In an embodiment, the system comprises an initial coupon input unit configured for receiving information indicative of an initial coupon design. The coupon design unit may then be configured for verifying whether the initial coupon design fulfils said compliance conditions and/or said properties of the component carriers. If the initial coupon design is verified or approved, the coupon design unit may design the coupon using the information indicative of the initial coupon design, or at least using it as a starting point for the coupon design. Hence, the system may also verify whether an initial coupon design complies with the compliance conditions in terms of the at least one industrial standard and the user-defined compliance conditions. If this is the case, the initial coupon design may be approved or verified as standard-conformal and product-conformal. If this is not the case, the system may propose or carry out a modification of the coupon design compared to the initial coupon design.

In an embodiment, the coupon design unit is configured for designing the coupon in accordance with at least one boundary condition relating to Good Manufacturing Practice (GMP). GMP may describe practices required in order to conform to guidelines recommended by agencies that control the authorization and licensing of the manufacture and sale of products. These guidelines may provide minimum requirements that a manufacturer shall meet to assure that products are consistently high in quality, from batch to batch, for their intended use. By cross-checking a coupon design with GMP requirements, GMP-incompatible component carriers may be avoided.

In an embodiment, the coupon design unit is configured for designing the coupon to be compatible with a quality test of the coupon carried out by a fully automated apparatus. Thus, the coupon may be designed specifically for an apparatus configured for carrying out a quality test concerning component carriers related to said coupon without any user intervention. This may render the quality test more objective and hence reliable while simultaneously achieving a higher throughput.

In an embodiment, the coupon design unit is configured for designing the coupon with a handling area configured for handling the coupon by a robotic handling unit (for instance comprising a multi-axis robot)and being free of test targets for the quality test. A dedicated handling area for handling of the coupon by a robotic handling unit of an automated quality test apparatus may be provided on a surface of the coupon, which is free of tests targets used for the actual quality test. Thereby, the quality test is not influenced by the handling and can be carried out even simultaneously with the handling. Thus, a coupon designed according to an exemplary embodiment of the invention may be properly adjusted for automated robotic handling.

In an embodiment, the coupon design unit is configured for designing the coupon so that the handling area is provided on both opposing main surfaces of a base plate of the coupon, in particular at corresponding positions. This allows a handling unit of an automated apparatus to grip and preferably clamp the coupon between both opposing sides to therefore properly handle the coupon without any risk that the coupon slips off the handling unit. Tooling holes at or close to the handling area may allow pins of the handling unit to support the handling of the coupon.

In an embodiment, the coupon design unit is configured for designing the coupon with a test area comprising test targets for the quality test. Spatially separated from the handling area of the coupon may be a test area with test targets (such as a sequence of drill holes, optionally filled with electrically conductive material such as copper) which can be subjected to a material removal process (for example, but not limited to, abrasive material removal, for instance for creating a cross-section of the coupon) which can be carried out during executing the quality test (for instance for exposing drill holes to be assessed as test targets or features).

In an embodiment, the coupon design unit is configured for designing the test targets as a sequence of test holes, in particular test holes filled with electrically conductive material. Filling test holes with copper may also allow to easily distinguish test holes from preferably unfilled alignment through holes. Furthermore, metal filled test holes may be easily visually identified with high contrast against resin in a captured cross-sectional image. Filling test holes with copper may be correlated with a solder float test which may be carried out prior to the material removal. When plated through holes are present i.e. when test holes are partially filled with metal, the solder material may rise in the plated through holes due to capillary forces or wetting. In case of non-plated through holes, said rise of solder does not occur due to a lacking wettability. Such unfilled test holes may simplify alignment which can then be accomplished by through light illumination.

In an embodiment, the sequence of test holes comprises at least one of the group consisting of at least two test holes of different dimensions (for instance different diameters), at least two test holes of identical dimensions (for instance the same diameter), at least three test holes arranged along a straight line, and at least three test holes in a common cross-sectional plane (i.e. being coplanar). Such arrangements of test holes may provide meaningful information in terms of quality testing.

In an embodiment, the coupon design unit is configured for designing the coupon with an identifier configured for identifying the coupon and/or the related component carriers. Identifying a coupon during a quality test based on its identifier may be highly advantageous in terms of traceability and may be considered as powerful feature for automating the quality test. The identifier may be formed on and/or in the base plate. Preferably, it is also possible to create the identifier to form part of the layer structures of the base plate. Highly advantageously, the identifier of the coupon may then be manufactured during processing the panel, most preferably by patterning an electrically conductive layer (for instance made of copper) to thereby create the identifier (for instance embodied as a barcode or a QR code) during patterning layer structures for manufacturing the component carriers. By taking this measure, the extra effort (in particular human resources effort) for manufacturing the identifier is minimal. Preferably, the identifier uniquely identifies its coupon and/or the related component carriers. Hence, no two coupons may have the same identifier in such an embodiment.

In an embodiment, the identifier comprises at least one of the group consisting of a QR code, a barcode, a transponder, an electrically readable identifier, and an alphanumeric code. For instance, such an identifier may be a QR code, a barcode, an alphanumeric code, or any other optically readable code. Alternatively, the identifier may be a wireless transponder connected with the base plate, for instance an RFID tag or an NFC tag. Such a transponder may be read out by a corresponding reader device of the apparatus.

In an embodiment, the coupon design unit is configured for designing the coupon with one or more alignment structures, in particular one or more alignment through holes. In order to ensure a proper orientation of an exposed surface of the coupon (showing the at least one test target in a desired fashion) with respect to a camera capturing an image of said exposed surface, the apparatus may automatically determine the position of one or more alignment markers of the coupon and may adjust the position and/or orientation of the coupon before capturing the image. Additionally or alternatively, prior to or during material removal for exposing said surface such an alignment process may be carried out. This improves the accuracy of the quality test. Configuring the alignment structures as alignment through holes may allow to properly carry out alignment measurements using an optical camera, and preferably a light source cooperating therewith. For instance, such a camera may capture an image of the coupon, wherein the alignment through holes may be easily determinable on such an image with high contrast based on the detection of light propagating only through the through holes.

In an embodiment, the coupon design unit is configured for designing the coupon with a mechanical code feature, in particular a slanted corner or edge of the substantially rectangular coupon, for disabling erroneous insertion into an apparatus for carrying out the quality test. This mechanical code renders any misalignment of a coupon with respect to an automated apparatus impossible and ensures an error robust automated quality test.

In an embodiment, the coupon design unit is configured for designing the coupon with at least one sacrificial structure, in particular at least one electrically conductive sacrificial structure, to be at least partially removed during removing material of the coupon for exposing at least one test target, wherein the at least one sacrificial structure is configured to be used for detecting a progress of the material removal up to a target exposure of the at least one test target. In particular, the at least one sacrificial structure may be arranged so that it is fully removed during removing material of the coupon when a center of a test target (for instance a test hole, or a test element of an electrically conductive layer structure such as a line, trace or pad) of the at least one test target is reached. Advantageously, measuring an electric signal indicative of an ohmic resistance of a sacrificial structure during material removal may allow to determine progress of a material removal process, and to control the material removal process correspondingly. During said material removal process, also the sacrificial structure may be removed continuously which changes its ohmic resistance continuously. Measuring the ohmic resistance of the remaining portion of the sacrificial structure during material removal of the coupon may therefore allow conclusions concerning a progress of the material removal process. Based on such a measurement on the sacrificial structure, a material removal process may be stopped exactly in time for exposing tests targets in a predefined way (for instance exposing centers thereof), for example when a predefined ohmic resistance of the sacrificial structure is measured.

In an embodiment, the coupon design unit is configured for designing the coupon with multiple integrally connected and functionally separate coupon sections, each configured for being separable and individually usable for a quality test by an automated apparatus. For instance, each coupon section may comprise an assigned handling area and an assigned test area. It is also possible that each coupon section comprises an identifier, an alignment structure, or any other feature described herein for the coupon. Highly advantageously, a coupon may be designed as a modular structure with individually separable coupon sections. Consequently, a user may, depending on the requirements of a certain quality test, only use one or some of the coupon sections for a quality test. This saves resources and increases the flexibility of the user to adjust the coupon properties in a modular way specifically to the needs of a respective application. Some of the coupon sections may be redundant in terms of test targets in order to support different tests and/or different material removal processes to check different test targets. Test targets may be in particular all geometrical features (such as vias, layers) of a component carrier (for instance a PCB), which may be reflected by the coupon.

In an embodiment, the component carrier structure comprises a stack of at least one electrically insulating layer structure and at least one electrically conductive layer structure. For example, the component carrier may be a laminate of the mentioned electrically insulating layer structure(s) and electrically conductive layer structure(s), in particular formed by applying mechanical pressure and/or thermal energy. The mentioned stack may provide a plate-shaped component carrier capable of providing a large mounting surface for further components and being nevertheless very thin and compact.

In an embodiment, the component carrier structure is shaped as a plate. This contributes to the compact design, wherein the component carrier nevertheless provides a large basis for mounting components thereon. Furthermore, in particular a naked die as example for an embedded electronic component, can be conveniently embedded, thanks to its small thickness, into a thin plate such as a printed circuit board.

In an embodiment, the component carrier structure is configured as one of the group consisting of a printed circuit board, a substrate (in particular an IC substrate), and an interposer.

In the context of the present application, the term "printed circuit board" (PCB) may particularly denote a plate-shaped component carrier which is formed by laminating several electrically conductive layer structures with several electrically insulating layer structures, for instance by applying pressure and/or by the supply of thermal energy. As preferred materials for PCB technology, the electrically conductive layer structures are made of copper, whereas the electrically insulating layer structures may comprise resin and/or glass fibers, so-called prepreg or FR4 material. The various electrically conductive layer structures may be connected to one another in a desired way by forming through holes through the laminate, for instance by laser drilling or mechanical drilling, and by filling them with electrically conductive material (in particular copper), thereby forming vias or other through hole connections. The (for instance partially) filled hole may connect the whole stack (through-hole connections extending through several layers or the entire stack), or the filled hole connects at least two electrically conductive layers, called via. Similarly, optical interconnections can be formed through individual layers of the stack in order to receive an electro-optical circuit board (EOCB). Apart from one or more components which may be embedded in a printed circuit board, a printed circuit board is usually configured for accommodating one or more components on one or both opposing surfaces of the plate-shaped printed circuit board. They may be connected to the respective main surface by soldering. A dielectric part of a PCB may be composed of resin with reinforcing fibers (such as glass fibers) or other reinforcing particles (such as reinforcing spheres, in particular glass spheres).

In the context of the present application, the term "substrate" may particularly denote a small component carrier. A substrate may be a, in relation to a PCB, comparably small component carrier onto which one or more components may be mounted and that may act as a connection medium between one or more chip(s) and a further PCB. For instance, a substrate may have substantially the same size as a component (in particular an electronic component) to be mounted thereon (for instance in case of a Chip Scale Package (CSP)). More specifically, a substrate can be understood as a carrier for electrical connections or electrical networks as well as component carrier comparable to a printed circuit board (PCB), however with a considerably higher density of laterally and/or vertically arranged connections. Lateral connections are for example conductive paths, whereas vertical connections may be for example drill holes. These lateral and/or vertical connections are arranged within the substrate and can be used to provide electrical, thermal, and/or mechanical connections of housed components or unhoused components (such as bare dies), particularly of IC chips, with a printed circuit board or intermediate printed circuit board. Thus, the term "substrate" also includes "IC substrates". A dielectric part of a substrate may be composed of resin with reinforcing particles (such as reinforcing spheres, in particular glass spheres).

The substrate or interposer may comprise or consist of at least a layer of glass, silicon (Si) and/or a photoimageable or dry-etchable organic material like epoxy-based build-up material (such as epoxy-based build-up film) or polymer compounds (which may or may not include photo- and/or thermosensitive molecules) like polyimide or polybenzoxazole.

In an embodiment, the at least one electrically insulating layer structure comprises at least one of the group consisting of a resin or a polymer, such as epoxy resin, cyanate ester resin, benzocyclobutene resin, bismaleimide-triazine resin, polyphenylene derivate (e.g. based on polyphenylether PPE), polyimide (PI), polyamide (PA), liquid crystal polymer (LCP), polytetrafluoroethylene (PTFE) and/or a combination thereof. Reinforcing structures such as webs, fibers, spheres or other kinds of filler particles, for example made of glass (multilayer glass) in order to form a composite, could be used as well. A semi-cured resin in combination with a reinforcing agent, e.g. fibers impregnated with the above-mentioned resins is called prepreg. These prepregs are often named after their properties e.g. FR4 or FR5, which describe their flame retardant properties. Although prepreg particularly FR4 are usually preferred for rigid PCBs, other materials, in particular epoxy-based build-up materials (such as build-up films) or photoimageable dielectric materials, may be used as well. For high frequency applications, high-frequency materials such as polytetrafluoroethylene, liquid crystal polymer and/or cyanate ester resins, may be preferred. Besides these polymers, low temperature cofired ceramics (LTCC) or other low, very low or ultra-low DK materials (wherein "DK" may refer to the real part of the dielectric constant) may be applied in the component carrier as electrically insulating structures.

In an embodiment, the at least one electrically conductive layer structures comprises at least one of the group consisting of copper, aluminum, nickel, silver, gold, palladium, and tungsten. Although copper is usually preferred, other materials or coated versions thereof are possible as well, in particular coated with supra-conductive material such as graphene.

At least one component, which can be embedded in the stack, can be selected from a group consisting of an electrically non-conductive inlay, an electrically conductive inlay (such as a metal inlay, preferably comprising copper or aluminum), a heat transfer unit (for example a heat pipe), a light guiding element (for example an optical waveguide or a light conductor connection), an electronic component, or combinations thereof. An inlay could be for instance a metal block, with or without an insulating material coating (IMS-inlay), which could be either embedded or surface mounted for the purpose of facilitating heat dissipation. Suitable materials are defined according to their thermal conductivity, which should be at least 2 W/mK. Such materials are often based, but not limited to metals, metal-oxides and/or ceramics as for instance copper, aluminium oxide (Al₂O₃) or aluminum nitride (AIN). In order to increase the heat exchange capacity, other geometries with increased surface area are frequently used as well. Furthermore, a component can be an active electronic component (having at least one p-n-junction implemented), a passive electronic component such as a resistor, an inductance, or capacitor, an electronic chip, a storage device (for instance a DRAM or another data memory), a filter, an integrated circuit (such as field-programmable gate array (FPGA), programmable array logic (PAL), generic array logic (GAL) and complex programmable logic devices (CPLDs)), a signal processing component, a power management component (such as a field-effect transistor (FET), metal-oxide-semiconductor field-effect transistor (MOSFET), complementary metal-oxide-semiconductor (CMOS), junction field-effect transistor (JFET), or insulated-gate field-effect transistor (IGFET), all based on semiconductor materials such as silicon carbide (SiC), gallium arsenide (GaAs), gallium nitride (GaN), gallium oxide (Ga₂O₃), indium gallium arsenide (InGaAs) and/or any other suitable inorganic compound), an optoelectronic interface element, a light emitting diode, a photocoupler, a voltage converter (for example a DC/DC converter or an AC/DC converter), a cryptographic component, a transmitter and/or receiver, an electromechanical transducer, a sensor, an actuator, a microelectromechanical system (MEMS), a microprocessor, a capacitor, a resistor, an inductance, a battery, a switch, a camera, an antenna, a logic chip, and an energy harvesting unit. However, other components may be embedded in the component carrier. For example, a magnetic element can be used as a component. Such a magnetic element may be a permanent magnetic element (such as a ferromagnetic element, an antiferromagnetic element, a multiferroic element or a ferrimagnetic element, for instance a ferrite core) or may be a paramagnetic element. However, the component may also be a IC substrate, an interposer or a further component carrier, for example in a board-in-board configuration. The component may be surface mounted on the component carrier and/or may be embedded in an interior thereof. Moreover, also other components, in particular those which generate and emit electromagnetic radiation and/or are sensitive with regard to electromagnetic radiation propagating from an environment, may be used as component.

In an embodiment, the component carrier is a laminate-type component carrier. In such an embodiment, the component carrier is a compound of multiple layer structures which are stacked and connected together by applying a pressing force and/or heat.

After processing interior layer structures of the component carrier, it is possible to cover (in particular by lamination) one or both opposing main surfaces of the processed layer structures symmetrically or asymmetrically with one or more further electrically insulating layer structures and/or electrically conductive layer structures. In other words, a build-up may be continued until a desired number of layers is obtained.

After having completed formation of a stack of electrically insulating layer structures and electrically conductive layer structures, it is possible to proceed with a surface treatment of the obtained layers structures or component carrier.

In particular, an electrically insulating solder resist may be applied to one or both opposing main surfaces of the layer stack or component carrier in terms of surface treatment. For instance, it is possible to form such as solder resist on an entire main surface and to subsequently pattern the layer of solder resist so as to expose one or more electrically conductive surface portions which shall be used for electrically coupling the component carrier to an electronic periphery. The surface portions of the component carrier remaining covered with solder resist may be efficiently protected against oxidation or corrosion, in particular surface portions containing copper.

It is also possible to apply a surface finish selectively to exposed electrically conductive surface portions of the component carrier in terms of surface treatment. Such a surface finish may be an electrically conductive cover material on exposed electrically conductive layer structures (such as pads, conductive tracks, etc., in particular comprising or consisting of copper) on a surface of a component carrier. If such exposed electrically conductive layer structures are left unprotected, then the exposed electrically conductive component carrier material (in particular copper) might oxidize, making the component carrier less reliable. A surface finish may then be formed for instance as an interface between a surface mounted component and the component carrier. The surface finish has the function to protect the exposed electrically conductive layer structures (in particular copper circuitry) and enable a joining process with one or more components, for instance by soldering. Examples for appropriate materials for a surface finish are Organic Solderability Preservative (OSP), Electroless Nickel Immersion Gold (ENIG), gold (in particular Hard Gold), chemical tin, nickel-gold, nickel-palladium, Electroless Nickel Immersion Palladium Immersion Gold (ENIPIG), etc.

The aspects defined above and further aspects of the invention are apparent from the examples of embodiment to be described hereinafter and are explained with reference to these examples of embodiment.
Figure 1 illustrates a flowchart of a method of carrying out a quality test of a component carrier structure according to an exemplary embodiment of the invention.
Figure 2 schematically illustrates an apparatus for carrying out a quality test of a component carrier structure according to an exemplary embodiment of the invention.
Figure 3 illustrates details of an apparatus for carrying out a quality test of a component carrier structure according to an exemplary embodiment of the invention.
Figure 4 illustrates a computer-implemented system for designing a coupon for carrying out a quality test concerning coupon-related component carriers according to an exemplary embodiment of the invention.
Figure 5 illustrates a schematic diagram showing a process of designing a coupon for carrying out a quality test concerning coupon-related component carriers according to an exemplary embodiment of the invention.
Figure 6 illustrates a plan view of a coupon for a fully automated quality test apparatus designed according to Figure 4 and Figure 5.
Figure 7 illustrates a coupon comprising multiple integrally connected coupon sections designed according to Figure 4 and Figure 5.
Figure 8 illustrates another coupon designed according to Figure 4 and Figure 5.

The illustrations in the drawings are schematic. In different drawings, similar or identical elements are provided with the same reference signs.

Before referring to the drawings, exemplary embodiments will be described in further detail, some basic considerations will be summarized based on which exemplary embodiments of the invention have been developed.

According to an exemplary embodiment of the invention, a system for building and verification of a test coupon design is provided which may take into account all needed test items. More specifically, a fully automated system for building and verification or approving of a test coupon for all needed test items may be provided. Such a system may enable to provide a coupon design complying with all standards and requirements which shall be considered for creating a test coupon, and an automated tool may be provided for this purpose. In particular, an exemplary embodiment of the invention may combine IPC (Institute for Printed Circuits) regulations, application-specific user requirements, and requirements for an automated coupon-based quality test. On this basis, exemplary embodiments may automatically generate a coupon design. Such an architecture may reduce or even eliminate human errors, and may be more flexible and faster to react to changes in requirements than conventional approaches. Furthermore, such a coupon design architecture may allow creating a modular coupon without superfluous features. This may render the use of resources more efficient.

Advantageously, the requirements for test coupons may be written in an external document or standard (in particular as a recipe for physically manufacturing the coupon). A system according to an exemplary embodiment of the invention may compile all defined requirements automatically. Such a system may also be able to design and validate a test coupon automatically. The mentioned system may also be able to test and/or verify existing coupon designs against a pre-compiled set of requirements. Exemplary embodiments may vastly improve a capability for laboratory inspections. In particular, the automatic coupon design system according to an exemplary embodiment of the invention may specifically provide a high degree of automation in the coupon creation process and may also carry out a verification of the obtained coupon design. A coupon design tool according to an exemplary embodiment of the invention may allow to provide IPC compliant designs and may additionally take into account realities of PCB production and laboratory testing. In particular, automation of coupon generation can be carried out while taking due care of requirements in terms of integration and combination of different boundary conditions for coupon design.

According to an exemplary embodiment of the invention, test coupon features may be defined and verified by a computer-based system rather than by engineers, which is less labor intensive, as all features from the PCB and from the standards may be compiled by a processor. Such a system may allow to freely adjust a coupon design compliant with a Conformance Test Coupon according to Chapter 12.1 of IPC-2221B (version: November 2012). Due to the dynamic character of such a coupon design system, the coupon may be precisely adapted to correspond to actual product attributes and may also lead to optimal panel-utilization. Highly advantageously, a modular coupon design becomes possible due to the processor-based design procedure which is not limited by human resources.

A gist of an exemplary embodiment is a software tool that may be aware of standards and specification data concerning a component carrier product. The tool may then automatically create a coupon in compliance with said standards and specification. It is also possible that an existing coupon can be checked for correctness in terms of said standards and specification.

When the coupon design had been completed by a system according to an exemplary embodiment of the invention, the coupon may be physically manufactured together with component carriers on a common panel. Thereafter, the coupon may be separated from the panel and may be subjected to a quality test, preferably in a fully automated quality test apparatus. Due to the common manufacture of coupon and component carriers, results of the quality test carried out for the coupon can be expected to be indicative of a quality of the component carriers as well. During the quality test of the coupon, the coupon may be subjected to a material removal process (for instance grinding) to expose a (for instance cross-sectional) plane of interest of the coupon showing one or more test targets (such as a drill hole). In the context of the present application, the term "removing material for exposing a plane" may particularly denote a material removal in a horizontal, vertical or diagonal direction of the coupon. Hence, the exposed plane can have any orientation (in particular horizontal, vertical, or diagonal). Thereafter, an image of the exposed plane may be detected by a detection unit, one or more test targets (such as a drill hole) may be determined on the image, and the quality may be assessed based on the determined at least one test target.

Examples for variables having an influence on cross-sectioning of component carrier structures (see a more detailed discussion of the individual variables below) are a grinding body used for material removal, alignment (for instance making use of a handling arm), pressure applied during grinding and/or polishing, rotation speed during grinding and/or polishing, control in particular of a material removal from a component carrier structure (more specifically material removal progress control), cleaning (of component carrier structure and/or grinding body) to avoid carryover, heating or cooling, and thermal and mechanical loads.

What concerns grinding, adjustable parameters are grain size, contact pressure, and rotation speed of abrasive medium. Grain may also be adjusted for a grinding machine. Polishing of a cross-sectional surface of the component carrier structure may be carried out using a diamond suspension (wherein rotation may be synchronized or reciprocal). Optionally, immersion and/or filling of a component carrier structure may be possible to prevent smearing of copper holes.

With respect to a used grinding body for material removal, it may be advantageous that the material removal process does not generate excessive heat to keep the laminate of the component carrier structure intact. Preferably, the material removal process may be carried out at a temperature significantly below the glass transition temperature Tg (for example at least 10% below Tg on the Celsius scale or on the Kelvin scale) of the resin material of the component carrier material. For example, water can be used as a cooling and/or cleaning medium.

For removing material of the component carrier structure, grinding may be preferred. However, material removal can also be accomplished by (for instance wire) cutting, wire eroding, plasma treatment, laser treatment, sandblasting, water jetting, milling, sawing, treatment by gate shears, ion beam treatment and/or punching.

Preferably, the grain size may be (in particular at the end of the material removal) fine enough that subsequent polishing is supported. Grain size may be selected depending on a used polishing suspension. For example, 3 µm grains may be applicable for only a certain degree of grinding.

In order to suppress a variance of planarity of a ground and/or polished surface of the component carrier structure, it may be advantageous to avoid excessive heat and cold. Furthermore, thermal and mechanical loads should be kept low.

When designing a handling arm of the handing unit, slipping and/or turning of the component carrier structure should be kept as low as possible. This advantageous boundary condition may influence the choice of a maximum rotation speed.

Next, embodiments of the grinding process will be explained. Advantageously, an iterative grinding control process may be carried out. Grinding disks (or plates) may be arranged horizontally or vertically, or at a special angle if required or desired (in view of an implemented type of grinding).

What concerns the control of a progress of the material removal, a camera may be used for monitoring grinding progress. For instance, such a camera may be arranged on and/or in a grinding body. This may promote planarity and/or alignment of the treated surface of the component carrier structure. Progress control may also be accomplished by an electric measurement, for instance by contacting a copper structure which is removed partially or entirely at a certain material removal progress state, which can be detected by a change of an electric signal. Additionally alternatively, progress control may be based on one or more mechanical stops (for instance having a sufficiently hard surface, preferably a diamond surface), against which a grinding body abuts when a predefined progress of the material removal process is achieved. Also a resistance measurement on a grinding body may be used for progress control. In other embodiments, progressive feed may be measured in terms of progress control. For example referring to a through hole, the moment that such a hole is opened may result in a significant pressure drop. When a micro via is reached, the impact on pressure may be the other way around, i.e. a pressure increase, or resistance increase may be detected. Grinding metallic via material rather than softer resin material may increase the pressure. If an electric signal is measured at the micro via and the electrically conductive material of the micro via is removed, the electric resistance may increase, which may be detectable as well. In yet another embodiment of progress control, discoloration for instance of water upon target achievement may be detected. Also a resistance measurement (for instance of a sacrificial structure removed during grinding) may be used for progress control. In yet another embodiment relating to progress control, sound detection, tribometer-based detection, a pin pressing on a grinding disc (optionally combined with a light barrier), etc., may be used. Once a center of a drill hole is detected, then grinding may stop.

Preferably, progress can be measured at or close to a test target. Still referring to progress control of a grinding process, a hard stop may be possible. However, also iterative grinding processes are possible.

In an embodiment, contact pressure between grinding body and component carrier structure may be measured. For instance, this may be accomplished in an automated manner by a pressure regulator (regulating for instance depending on force). During material removal, the pressure can remain constant or may be varied. A smaller number of grinding bodies can be balanced with time, pressure, rotation. It may also be possible to apply a variable pressure depending on throughput, quality target, sample thickness. Maximum pressure may be regulated in such a way that no damage of the component carrier structure occurs, in particular at or around test targets such as drill holes. In particular, the contact pressure can be selected depending on how the component carrier should be ground (for instance grinding along layers, grinding against layers, etc.). Care should be taken that cutting preparation neither enhances nor reduces quality problems in the component carrier structure.

What concerns rotation speed and type, it may be advantageous to generate heat only in a range below a predefined maximum value. A rotation direction may be synchronized or may be opposite. A gripping or handling device (such as a clamping device, a handling fixture, a hexapod, etc.) can oscillate quickly.

Parameters which can be adjusted in terms of rotation are rotation time, contact pressure, type of rotation, material of the component carrier structure, grain, etc.

Concerning alignment or orientation of the component carrier structure during its treatment for carrying out the quality test in an automated way, a camera may determine whether the component carrier structure sample is positioned correctly before a first grinding. If necessary, the position of the component carrier structure may be corrected to ensure a proper alignment (for instance based on a comparison with external reference holes that are preferably not coppered; such reference holes may for instance be drilled or etched in a photo process). Alternatively, a mechanical alignment process (for instance using an alignment pin) may be carried out.

An objective of the alignment may be that a target plane and a grinding medium should be oriented in parallel. This may be achieved by correspondingly influencing medium, grinding body, turning one or even all of the involved components, etc.

Still referring to alignment, a camera image may capture reference points and target points to be viewed. Such data may define a target plane (software-supported, mechanically, etc.) and may bring a target plane parallel to the grinding medium. In the further course of alignment control, limiting factor may be the combination of hexapod/grinding speed/maximum force, so that the alignment remains which corresponds to the mechanical stability of the overall system.

Now referring to cleaning of the component carrier structure, one embodiment may clean the component carrier structure during grinding. In an iterative approach, each new grinding stage (for instance fine grinding following coarse grinding) may be preceded by a cleaning stage. Cleaning may ensure that no carryover of particles takes place. For instance, particles may be blown away, sucked away, evaporated, burnt, stripped off, brushed, rinsed, etc., in terms of cleaning. For instance, continuous cleaning may be carried out during the grinding process. Suction, rinse (preferably bath or sink), strip off, blow away, ultrasonic bath (shake out) or other cleaning units may be implemented. Advantageously, very small cracks may be rinsed out by cleaning. After cleaning, it may be advantageous that the remaining particles should be at the maximum equal in size to or smaller in size than the grain size used for grinding in the next process.

What concerns coupon design, it may be standardized, or may deviate. Any deviation may be coordinated with a user. For instance, a coupon-type component carrier structure may be provided with one or more registration holes, a wear sensor, etc.

Examples for quality criteria or characteristics in terms of assessing quality of a component carrier structure are a sharp edge (preferably 90°), a radius near zero, planarity, a tolerance below a predefined threshold value (for instance 10% or preferably less than 10%, having a tolerance of not more than 7%). A further quality feature of a component carrier structure is that it is should be preferably scratch-free in an image at 100x magnification. Furthermore, the component carrier structure should be free of gaps (in particular between sample and embedding agent, more particularly between conductive layer and embedding agent, especially between copper and embedding agent). Resins may shrink when embedding (fast curing embedding agents have a lot of volume loss, slow curing agents have little volume loss), but shrinkage should not be excessive.

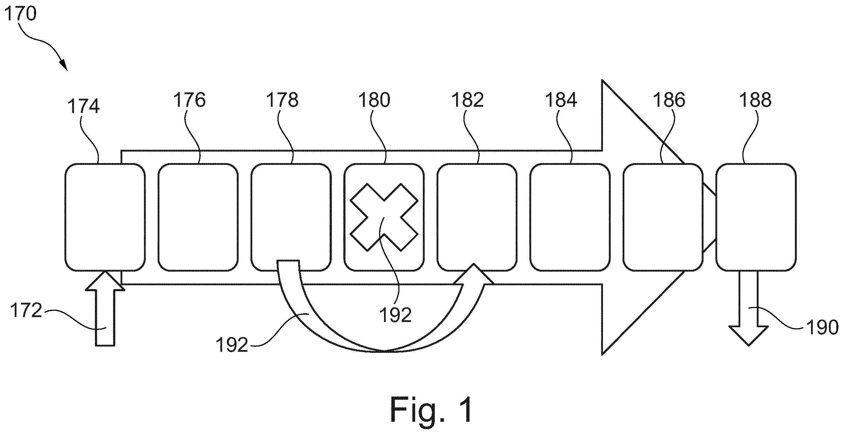

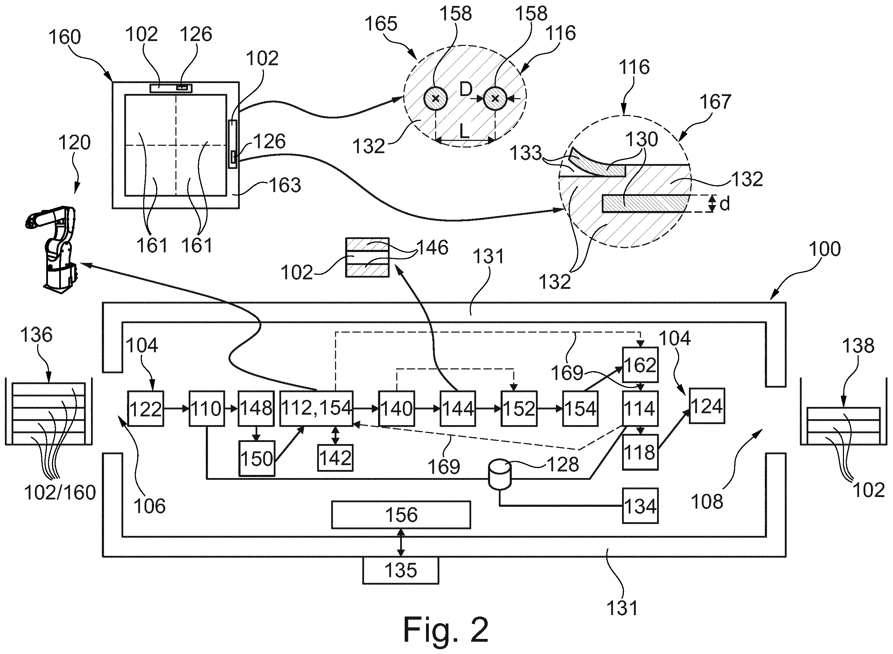

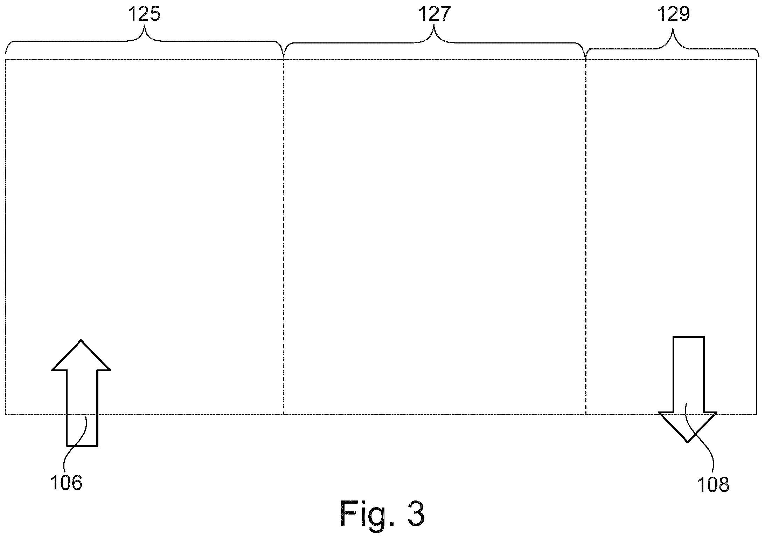

**Figure 1** illustrates a flowchart 170 of a method of carrying out a quality test of a component carrier structure 102 according to an exemplary embodiment of the invention. The reference signs used for the description of Figure 1 refer to the embodiments of Figure 2 or Figure 3. Preferably, the mentioned component carrier structure 102 may be a coupon forming part of a panel and used for testing component carriers (such as printed circuit boards (PCBs) or integrated circuit (IC) substrates). However, the component carrier structure 102 may be alternatively a panel or an array (such as a quarter panel) comprising multiple connected preforms of component carriers, or a preform of a component carrier or a readily manufactured component carrier.

Advantageously, the method of flowchart 170 may correspond to the execution of a quality test of the component carrier structure 102 by an automated apparatus 100. Preferably, the method may comprise carrying out the quality test without human intervention between an inlet 106 - corresponding logically to input 172 - and an outlet 108 - corresponding logically to output 190 - of said apparatus 100. In other words, inlet 106 of apparatus 100 corresponds to input 172 of the method, whereas outlet 108 of apparatus 100 corresponds to output 190 of the method. More specifically, an automated process for cross section preparation and visual inspection as well as measurement of a component carrier structure 102 is provided. Preferably, no manual work occurs, and the entire process may be automated. For this purpose, the test coupon-type component carrier structure 102 may be configured for automated handling and for machine-readable serialization.

As indicated with reference sign 172, the component carrier structure 102 may be input into apparatus 100.

Referring to a block 174, a coupon may be inserted as component carrier structure 102 into the apparatus 100 and may hereby be handled fully automatically by a robot 120. More specifically, the coupon may be a component carrier structure 102 which may for example be constructed or designed in accordance with IPC-2221. The component carrier structure 102 may provide traceability information to the apparatus 100. For this purpose, the method which may be carried out using apparatus 100 may comprise automatically identifying the component carrier structure 102 which shall undergo the quality test. For instance, it may be possible to register the coupon-type component carrier structure 102 in a list. Multiple coupons may be sorted. For traceability purposes, it may be possible to assign information such as lot number, panel number, array number, x/y information, cross section number, a report number, a request identifier, etc., in a data set assigned to a respective component carrier structure 102. For instance, such data sets may be stored in a database 128.

Referring to a block 176, the component carrier structure 102 which may still be integrally connected with the rest of a panel or the like may be singularized or separated, for instance by milling or cutting the component carrier structure 102 out from a larger body 160 such as a panel. For this purpose, it may be possible to search a defined position of the component carrier structure 102 in the larger body 160 and cut it out. As a result, a test sample in form of the separated component carrier structure 102 may be obtained. For instance, cutting out the component carrier structure 102 may be accomplished in accordance with a smallest plated through hole or corresponding to a user definition.

Referring to a block 178, the component carrier structure 102 may then be subjected to thermal stress, for instance by executing a solder float test. For example, the component carrier structure 102 may be immersed in molten solder for subjecting thermal stress to the component carrier structure 102. As an alternative to a solder float test, it may also be possible to carry out an alternative thermal stressing method, e.g. reflow simulation.

Referring to a block 180, the component carrier structure 102 may or may not be subjected to an encapsulation process for simplifying handling and/or for buffering stress during the subsequent quality test. While conventional manual quality tests of component carrier structures may require encapsulation before assessing quality, such an embedding may be omitted according to an exemplary embodiment of the invention involving a fully automatic quality test of the component carrier structure 102. If carried out optionally, the encapsulation process may put the component carrier structure 102 into embedding material, such as resin, for further preparation. However, such an embedding can be advantageously skipped (as indicated with reference sign 192) in other embodiments, since automated handling according to an exemplary embodiment of the invention can also be accomplished without such an encapsulation.

Referring to a block 182, it may then be possible to remove material of the component carrier structure 102 for exposing an interior of the component carrier structure 102 to be subjected to the quality test. More specifically, a microsection (in particular cross-section) of the component carrier structure 102 may be created. For this purpose, the component carrier structure 102 may be ground and subsequently polished up to a defined position (preferably up to a center of a via or drill hole or a pattern). For instance, different stages of sandpaper treatment and polishing may be carried out. For grinding, it may for instance be possible to use sandpaper with different grains (for instance using one or more of the following grains: 60, 180, 1200, 2000).

Referring to block 184, the method may then comprise determining one or more pre-defined test targets 116 (such as plated vias and their properties) of the component carrier structure 102 after said material removal. Furthermore, the method may comprise evaluating characteristics or attributes of the one or more test targets 116 of the component carrier structure 102 for assessing the quality of the component carrier structure 102. When skipping block 180, the method may comprise determining the at least one pre-defined test target 116 based on a non-encapsulated component carrier structure 102, otherwise based on an encapsulated component carrier structure 102. In particular, a visual analysis of the cross-section of the component carrier structure 102 may be carried out, preferably in an automated way. For example, x/y dimension measurements may be carried out (for instance inspecting a build-up, a copper thickness, etc.). In particular, the visual check may include an analysis of certain defects. During said inspection, one or more of the following test targets 116 and assigned characteristics may be considered: multilayer build up; plated through hole properties (like wall properties, land characteristics); quality of surface roughness (for instance, surface roughness may be determined corresponding to the Ra scale and/or corresponding to the Rz scale). In terms of roughness, the roughness value Rz may be used as a criterion for the presence of scratches at an exposed surface (in particular a cross-section) of the component carrier structure 102, whereas the roughness value Ra may be used as a criterion for the quality of the material removal process (in particular grinding process). For instance, a quality criterion may be that the roughness of a surface of the component carrier structure 102 exposed by grinding and/or polishing should not be larger than the roughness of a grinding disc and/or polishing paste used in a preceding material removal stage. If this criterion was not fulfilled, it may be concluded that an artifact has been introduced by an earlier material removal stage. For instance, a measurement resolution of at least 1 µm may be obtained. For example, a quality test may be carried out in accordance with IPC-6012, IPC-A-600, etc.

Referring to block 186, the method may comprise creating and storing a report with pre-defined properties. The report may summarize the quality test and its conclusions. This may ensure a proper documentation of the quality test.

Referring to block 188, the method may then comprise archiving the analyzed component carrier structure 102 and the quality test. In particular, this may involve sample storage, storage of electronic documentation, etc.

As indicated with reference sign 190, the component carrier structure 102 may then be output from the apparatus 100.

**Figure 2** schematically illustrates an apparatus 100 for carrying out a quality test of a component carrier structure 102, here embodied as a coupon, according to an exemplary embodiment of the invention. As indicated by a circumferential casing 131 of the apparatus 100, the entire quality test can be carried out in an automated manner within a closed cell.

On the top left-hand side of Figure 2, a plan view of a planar sheet-like body 160 is illustrated, which can be a panel for manufacturing a plurality of component carriers (such as printed circuit board) in a batch procedure. The illustrated panel may for instance have a dimension of 18 x 24 inch² or more. A central main area of the panel may be subdivided into multiple arrays 161 (four quarter panels in the shown embodiment), each comprising multiple PCBs. In a frame 163 surrounding the component carriers, one or more strip-shaped test coupons may be formed as component carrier structures 102. Advantageously, at least one horizontally extending component carrier structure 102 and at least one vertically extending component carrier structure 102 may be foreseen, so as to make it possible to carry out the quality test to identify potential structural defects in two perpendicular directions.

Referring now to apparatus 100 in further detail, an inlet accommodation unit 136 is arranged at an inlet 106 of said apparatus 100 and is configured for accommodating a plurality of component carrier structures 102 in a stacked fashion prior to testing. Hence, the coupon-type component carrier structures 102 may be inserted into the inlet accommodation unit 136 after separation from panel-type body 160. Alternatively, it is possible to stack the larger bodies 160 each including at least one component carrier structure 102 in the magazine-type inlet accommodation unit 136.

A robotic handling unit 104 is configured for handling the component carrier structure 102 (optionally still connected within body 160) along various portions between the inlet 106 and an outlet 108 of the apparatus 100. In particular, the handling unit 104 is configured for gripping and transferring the component carrier structure 102 to be tested (or the entire body 160) from the inlet accommodation unit 136 through the inlet 106 to a below described identification unit 110. More specifically, the handling unit 104 comprises an inlet handling subunit 122 configured for handling the component carrier structure 102 between the inlet 106 and a below described material removal unit 112. Advantageously, the handling unit 104 comprises one or more robots 120 which may comprise one or more hexapods, one or more linear robots, one or more articulated arm robots, etc. A six-axis robot or hexapod (schematically illustrated in Figure 2 at reference sign 120) may have axes equipped with sensors and being appropriate for handling component carrier structures 102 within fully automated apparatus 100. Advantageously, a hexapod may be used for a material removal process (in particular a grinding process) carried out by material removal unit 112, as such a hexapod can be mechanically stable and at the same time can be adapted very precisely in six axes. Referring to Figure 3, a six-axis robot or hexapod may be used in cross-sectional station 127 for operating material removal unit 112 and/or for operating alignment unit 154. Consequently, preparation of the component carrier structure 102 by material removal may become highly precise and robust against possible misalignments. Furthermore, a linear robot and/or an articulated arm robot (not shown) of inlet handling subunit 122 and/or at outlet handling subunit 124 of handling unit 104 can be used for handling component carrier structures 102 between the individual workstations of the automated apparatus 100.

As already mentioned, the inlet handling subunit 122 of the handling unit 104 forwards the component carrier structure 102 to the identification unit 110. The latter is configured for identifying the component carrier structure 102 for which the quality test shall be carried out. This may ensure traceability. More specifically, the identification unit 110 is configured for identifying the component carrier structure 102 based on the detection of an identifier 126 which may be physically connected to or which may form an integral part of the component carrier structure 102. For instance, such an identifier 126 may be a QR code, a barcode or an alphanumeric to code which can be read out by an optical reader of the identification unit 110. It is also possible that the identifier 126 is a transponder such as an RFID (radiofrequency identification) tag or an NFC (near field communication) tag. In such embodiments, the identification unit 110 may comprise a wireless reader configured for wirelessly reading out the transponder-type identifier 126 for retrieving identification information. For identifying the component carrier structure 102 based on its identifier 126 and/or for retrieving additional data (for instance specific quality test instructions) assigned to the identified component carrier structure 102, the identification unit 110 may access a corresponding database 128. In particular, the identification unit 110 may be configured for identifying the component carrier structure 102 by matching the detected identifier 126 with correlated identity information which is stored in an assigned data set in said database 128. For instance, such a data set may correlate an identification code readable from the identifier 126 with further information concerning the component carrier structure 102, for instance information concerning its manufacturing history (such as lot number, manufacturing date, manufacturing time, etc.). The identification unit 110 may also be configured for retrieving from the database 128 quality test related information indicative of the quality test to be carried out for the identified component carrier structure 102. Such quality test related information may define a quality test which shall be carried out for the identified component carrier structure 102. Different quality tests may be carried out for different types of component carrier structures 102.

In an embodiment in which the component carrier structure 102 has not yet been separated from the larger body 160 before introducing the component carrier structure 102 through inlet 106 into the apparatus 100, a singularization unit 148 (such as a milling machine or a laser cutter) may be provided and may be configured for singularizing the component carrier structure 102 from the panel-type body 160. For instance, singularization may be accomplished by milling or laser cutting.

Thereafter, the processed component carrier structure 102 may be conveyed by the handling unit 102 to a thermal stress exposing unit 150 configured for exposing the component carrier structure 102 to thermal stress. Preferably, the thermal stress exposing unit 150 is configured for floating the component carrier structure 102 on a thermal stress bath, which may comprise molten solder. Thereby, thermal stress may be subjected to the component carrier structure 100.

The component carrier structure 102 may then be forwarded by the above-mentioned or by another robot 120 of the handling unit 104 to a material removal unit 112. The latter is configured for removing material of the component carrier structure 102 for exposing an interior of the component carrier structure 102 undergoing or subjected to the quality test. In particular, the material removal unit 112 may be configured for removing material of the component carrier structure 102 by grinding, preferably cross-sectional grinding (or alternatively flat grinding).

For improving the precision of the material removal, the component carrier structure 102 may be aligned by an alignment unit 154 which may for instance be configured for determining an alignment marker (for instance a drill hole) of the component carrier structure 102 based on a captured image thereof). Said alignment may be carried out prior to grinding by material removal unit 112. Alignment unit 154 is assigned to the material removal unit 112 and may be configured for aligning the component carrier structure 102 before the material removal process. Hence, an alignment carried out by alignment unit 154 is preferably carried out before the material removal process executed by material removal unit 112. Such an alignment may thus form part of the material removal process, in particular grinding process.

Optionally, a removed material quantification unit 142 may be provided and configured for quantifying an amount of material removed from the component carrier structure 102 during grinding. By determining the amount of ground material, a grinding progress and hence a precise control of the grinding process may be made possible.

After grinding, the component carrier structure 102 may be supplied to a polishing unit 140 configured for polishing an exposed surface of the component carrier structure 102 after removing material. Rather than removing an additional substantial amount of material from the component carrier structure 102 (which occurs during grinding), polishing may reduce surface roughness and may improve surface quality without excessive material removal. A polished surface may provide more or more precise information concerning one or more tests targets 116 used as target features to be analysed in the following.

Only optionally, the component carrier structure 100 may then (or alternatively already before material removal by material removal unit 112) be supplied to an encapsulation unit 144 configured for encapsulating the component carrier structure 102 in an encapsulant 146 so that the component carrier structure 102 is to be detected subsequently in the encapsulant 146. Such encapsulant 146 may be a resin functioning as a stress buffer and simplifying handling of the component carrier structure 102 during a subsequent (and/or during a previous) analysis.

However, it may be alternatively possible and even preferred that such an encapsulation is omitted, since the fully automated quality test apparatus 100 may also be capable of carrying out the quality test of the component carrier structure 102 without encapsulation. Thus, even a non-encapsulated component carrier structure 102 may be subjected to the subsequent processes.

Thereafter, the (encapsulated or non-encapsulated) component carrier structure 102 may be forwarded, for instance by a further robot 120 of the handling unit 104, to a cleaning unit 152 configured for cleaning the component carrier structure 102. For instance, the component carrier structure 102 may be rinsed in an ultrasonic bath.

A further alignment unit 154 may be configured for aligning the component carrier structure 102 before detecting and determining tests targets 116 thereon. For this purpose, one or more alignment features (such as through holes, for instance arranged in corners) of the component carrier structure 102 may be detected and used for spatially aligning the component carrier structure 102.

The aligned component carrier structure 102 may then be imaged. For this purpose, a detection unit 162 may be provided and configured for detecting image data of a (meanwhile exposed by said material removal) interior of the component carrier structure 102.

Such image data may be transmitted to a determining unit 114. The latter may be configured for determining one or more pre-defined test target 116 of the component carrier structure 102. The test targets 116 may be predefined features visible in the imaged cross-section of the component carrier structure 102 and may relate to specifically meaningful features in terms of quality evaluation. Appropriate characteristics or attributes of test targets 116 of the component carrier structure 102 may be a diameter D of a drill hole 158 (in particular a laser drill hole or a mechanically drilled hole, which may be filled by plated copper), a distance L between such adjacent drill holes 158, a thickness d of an electrically conductive layer structure 130 (such as a patterned copper layer) and/or of an electrically insulating layer structure 132 (such as a sheet of prepreg), a planarity of a such a layer structure 130 and/or 132, and a degree of delamination (see reference sign 133) of such a layer structure 130 and/or 132. The mentioned test targets 116 are illustrated in Figure 2 in a top view 165 and in a side view 167, respectively. However, another test target 116 (for instance in the scenario of flat grinding) may be a copper line or a plurality of copper lines and a space in between.

Advantageously, the determining unit 114 is configured for processing the image data for determining or recognizing the pre-defined test targets 116. More specifically, the determining unit 114 may be configured for firstly determining the pre-defined test targets 116 in a coarse manner based on a detected first image of the component carrier structure 102. Moreover, the determining unit 114 may be configured for secondly determining the pre-defined test targets 116 in a refined manner based on a detected second image of the component carrier structure 102 detected after detecting the first image and after etching a surface of the component carrier structure 102. In an alternative embodiment, a one-shot operation of the determining unit 114 may be possible as well, in which the determining unit 114 determines test targets 116 based on a single image. As a basis for the determination, the determination unit 114 may also have access to database 128, for instance to get access to test targets 116 to be considered for the determination.

Highly advantageously and as indicated by a feedback loop 169, the determining unit 114 may be configured for determining the pre-defined test targets) 116 by iteratively repeating a sequence comprising material removal (optionally including polishing and/or cleaning and/or etching), image detection, and image analysis. By such an iterative approach (which can be terminated when a sufficient accuracy is achieved), the reliability of the quality test may be significantly improved.

As further shown in Figure 2, an evaluation unit 118 is provided which is configured for evaluating the determined test target(s) 116 of the component carrier structure 102 for assessing the quality of the component carrier structure 102. The evaluation unit 118 may be advantageously configured for evaluating a quality of the component carrier structure 102 based on properties of the determined test target(s) 116. More specifically, the evaluation unit 118 may be configured for evaluating the quality by classifying the component carrier structure 102 into one of a plurality of quality classes. Highly appropriate may be an automated classification of a respective component carrier structure 102 (and/or an assigned larger body 160) in one class of a group of classes consisting of "pass" (indicating that the component carrier structure 102 and/or the larger body 160 has/have passed the quality test), "fail" (indicating that the component carrier structure 102 and/or the larger body 160 has/have not passed the quality test), and "further analysis required" (indicating that the component carrier structure 102 and/or the larger body 160 need additional quality analysis, since the evaluation unit 118 is not yet in a position to decide in a meaningful way about the quality). In the latter case, it may also be possible to convey the component carrier structure 102 to a human operator for human analysis. The described communication and user impact can be exchanged between the user and the apparatus 100 by an input/output unit 135 being communicatively coupled with control unit or processor 156.

In particular, the evaluation unit 118 may be configured for evaluating the quality by classifying each test target 116 individually or preferably each attribute or characteristic of each test target 116 of the component carrier structure 102 individually into one of a plurality of quality classes, in particular in one class of a group of classes consisting of "pass", "fail", and "further analysis required". Only slight deviations of uncritical parameters may still allow to classify a component carrier structure 102 as "pass". A defect may be classified as critical or uncritical based on a type of a specific defect and/or based on the intensity of a specific defect. Such a quality test may comprise multiple criteria, which may be judged individually to enable fine-gained decisions on quality and performance.

For supporting its evaluation tasks, the evaluation unit 118 may comprise an artificial intelligence module 134 configured for carrying out the evaluation using artificial intelligence, for instance making use of a neural network. Training data, etc., for training the artificial intelligence module 134 may also be stored in database 128.

By an optional etching process of etching the exposed surface of the component carrier structure 102, additional features on the analysed exposed surface of the component carrier structure 102, such as grain boundaries and plating lines, may become visible. This may render the evaluation of the characteristics of the test targets 116 by the evaluation unit 118 even more accurate.

After said evaluation, the analysed component carrier structure 102 may be transported out of the apparatus 100. For this purpose, the handling unit 104 is provided with an outlet handling subunit 124 configured for handling the component carrier structure 102 by means of at least one additional robot 120, for instance between the material removal unit 112 and the outlet 108. As shown, the apparatus 100 comprises an outlet accommodation unit 138 (for instance also of a magazine-type) arranged at the outlet 108 and configured for accommodating a plurality of component carrier structures 102 in a stacked fashion after testing. The handling unit 104 may be configured for transferring a tested component carrier structure 102 through the outlet 108 to the outlet accommodation unit 138. This may be accomplished for example by further robot 120.

As indicated with reference sign 156, the apparatus 100 may comprise one or more processors or a part of a processor which may be considered as a control unit for controlling operation of the apparatus 100 and its above-described constituents during the quality test of the component carrier structure 102.

Highly advantageously, the apparatus 100 may be configured for carrying out the quality test without human intervention between the inlet 106 and the outlet 108. Only optionally, a user access may be possible via input/output unit 135. The automated character of the apparatus 100 may accelerate the quality test and may render the quality test more accurate while reducing human resources required in terms of quality testing. Furthermore, the throughput may be increased.

**Figure 3** illustrates details of an apparatus 100 for carrying out a quality test of a component carrier structure 102 according to an exemplary embodiment of the invention. Figure 3 illustrates a specific embodiment showing elements of the apparatus 100 of Figure 2.

An input section 125 relates to a portion of the apparatus 100 between inlet 106 and material removal. A cross-sectioning station 127 corresponds so a subsequent portion of the apparatus 100 at which a cross-section of the component carrier structure 102 is created in a fully automated way by grinding and subsequently polishing. An output section 129 relates to a portion of the apparatus 100 between cross-sectioning station 127 and outlet 108.

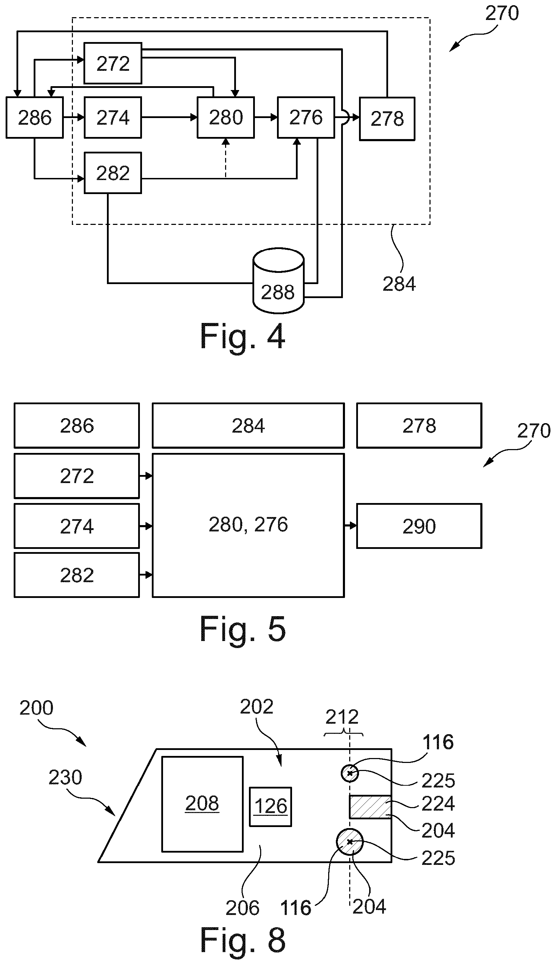

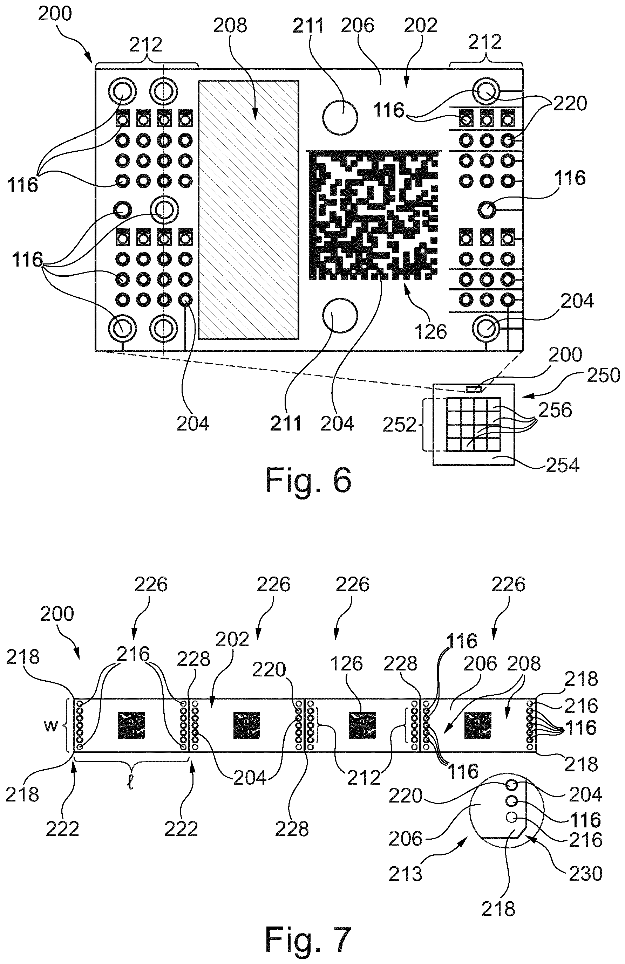

**Figure 4** illustrates a computer-implemented system 270 for designing a coupon 200 (see Figure 6 to Figure 8) for carrying out a quality test concerning coupon-related component carriers 256 (see Figure 6) according to an exemplary embodiment of the invention.

As described above referring to Figure 2 and Figure 3, a component carrier structure 102 may be subjected to a quality test in apparatus 100. Preferably, such a component carrier structure 102 may be a coupon 200. As can be taken from Figure 2 and Figure 3 as well, an automated apparatus 100 may be configured for carrying out a quality test concerning coupon-related component carriers 256 by testing coupon 200 (which corresponds to component carrier structure 102 of Figure 2). Apparently, the reliability of a quality test concerning component carriers 256 depends on the properties of the coupon 200 which is actually tested. In the following, it will be described how a user can easily design a coupon 200, meeting various requirements simultaneously, using an automated computer-based tool.

Now specifically referring to Figure 4, a corresponding computer-implemented system 270 can be provided for designing a coupon 200 for carrying out a quality test concerning coupon-related component carriers 256. As shown, system 270 comprises a user interface 286 which functions as an input/output unit and may for instance be a graphical user interface (GUI). User interface 286 may comprise input elements (such as a keypad, a computer mouse, a touchscreen and/or a voice recognition system) and output elements (such as a display, a loudspeaker, a touchscreen, etc.). A user may input or select via user interface 286 input data to be supplied to input units 272, 274, 282.

In particular, the system 270 comprises a compliance input unit 272 configured for receiving, via user interface 286, compliance input data indicative of compliance conditions to be fulfilled by the coupon 200 to be designed.

Advantageously, the compliance input unit 272 may be configured for receiving compliance input data indicative of compliance conditions in terms of one or more industrial standards. Such industrial standards (such as IPC-2221, a generic standard on printed board design) may for instance include definitions for the product classes, and general requirements for instance on documentation, qualification assessment, quality assurance, etc. In particular, IPC-6012 (in particular in the latest version being in force at the priority date of the present patent application) and IPC-A-600 (in particular in the latest version being in force at the priority date of the present patent application) are relevant industrial standards for the manufacture of printed circuit boards (PCBs) as an example for component carriers 256. Even more specifically, IPC-6012 relates to the qualification and performance specifications for rigid printed boards. Topics of the IPC-6012 industrial standard include material requirements, visual inspection requirements, solder mask requirements, electrical requirements and electrical tests to be performed, cleanliness requirements, and applicable tests. Via compliance input unit 272, a user may indicate one or more of the mentioned and/or other industrial standards with which the coupon 200 to be created should be compatible. Hence, it is possible to create standard-conformal coupons 200 using the system 270. As shown, compliance input unit 272 may have access to a database 288 in which information concerning industrial standards (such as IPC-6012, IPC-A-600, etc.) may be stored.

Additionally or alternatively, the compliance input unit 272 may also be configured for receiving, via user interface 286, compliance input data indicative of user-defined compliance conditions. For instance depending on the particularities of a specific application, a user may define compliance criteria (for instance electrical requirements) which shall be reflected by a created coupon 200 as well. By providing the user with an opportunity to define one or more additional boundary conditions which a designed coupon 200 shall fulfil, the freedom of design in terms of coupon creation may be further increased compared with conventional approaches in which only standard coupons are used which cannot be adapted to user-specific needs.

Beyond this, a product input unit 274 is provided which is configured for receiving, via user interface 286, product input data indicative of properties of component carriers 256 to be manufactured to which the coupon 200 to be designed is related. Advantageously, the product input unit 274 may be configured for receiving product input data indicative of a diameter D of a bore hole, a distance L between adjacent bore holes, and/or a thickness d of a layer structure (see Figure 2) of the component carriers 256 to be manufactured. In other words, while compliance input unit 272 may allow to define general compliance criteria which shall be fulfilled by the coupon 200 to be developed, product input unit 274 may allow a user to define component carrier-specific properties (for instance that drill holes of component carriers 256 shall have a diameter of for example 2 mm) which can then be reflected in the designed coupon 200. Descriptively speaking, product input unit 272 may allow a user to pre-define which PCB-specific attributes shall be considered for the creation of the coupon 200 being presently designed.

Furthermore, system 270 may comprise an initial coupon input unit 282 which may be configured for receiving, via user interface 286, information indicative of an initial coupon design. For instance, a user may have already developed a coupon which the user would like to use - provided that it is compatible with requirements of certain industrial standards and product specific requirements - also for a present application. A data set describing such a user-defined coupon may also be stored in database 288 and may be accessed by initial coupon input unit 282 upon a corresponding selection made by the user. The initial coupon design may be approved or not by the system 270. By combining the description of a user-sided initial coupon design with industrial standard-related criteria and/or product-specific criteria, it can be ensured that the initial coupon design is only maintained if or is only maintained to a limited degree when being not in contradiction with an industrial standard and a product defined by the user.

Inputs made via the input units 272, 274 (and optionally via input unit 282) may be supplied to an optional but advantageous collision determining unit 280. The latter may be configured for determining a potential collision or contradiction between compliance conditions in terms of the input one or more industrial standard and the input user-defined compliance conditions. In case the collision determining unit 280 determines the presence of a collision (for instance since a product-related boundary condition contradicts an industrial standard), a user may be invited to indicate, via user interface 286, whether the compliance conditions in terms of the respective industrial standard or the colliding user-defined compliance conditions shall have precedence for designing the coupon 200. Preferably, the collision determining unit 280 may be configured for, upon determining said collision, proposing modified compliance rules removing the collision between the compliance conditions in terms of the at least one industrial standard and the user-defined compliance conditions. If the collision is not remedied, the collision determining unit 280 may also continue with the coupon creation process by giving precedence to the user-defined product criteria.

Directly or via the optional collision determining unit 280, input data received by input units 272, 274 and/or 282 may be forwarded to a coupon design unit 276 for creating a data set indicative of all properties of the coupon 200 required for manufacturing the coupon 200. More specifically, coupon design unit 276 may be configured for designing the coupon 200 so as to fulfil said compliance conditions and/or said properties of the component carriers 256 and/or properties of the initial coupon design. In case of collisions, said collisions may be remedied by collision determining unit 280, as described above. Alternatively, collisions may be remedied by a pre-defined priority ranking, for instance giving user-defined product properties preference over requirements of industrial standards.

Preferably, the coupon design unit 276 may be configured for designing the coupon 200 using the information indicative of the initial coupon design as a starting point. Thus, only necessary adaptations of the initial coupon design in view of industrial standard conformity and/or product specifics may be sufficient for designing coupon 200. Hence, the computational burden needed for designing the coupon 200 may be kept small.

Furthermore, the coupon design unit 276 may be configured for designing the coupon 200 in accordance with at least one boundary condition relating to Good Manufacturing Practice (GMP). GMP rules may be stored in database 288 (to which the coupon design unit 276 may have access) and may also be considered as boundary conditions to be considered for the coupon design.

Highly advantageously, the coupon design unit 276 may be configured for designing the coupon 200 to be compatible with a quality test of the coupon 200 carried out by a fully automated apparatus 100, such as the ones shown in Figure 2 and Figure 3. In the following, several measures will be described which may be taken for rendering the designed coupon 200 properly compatible with fully automated quality testing. For the following description, reference is also made to the corresponding coupon features being illustrated in Figure 6 to Figure 8.

For supporting an automated quality test substantially without user intervention, the coupon design unit 276 may be configured for designing the coupon 200 with a handling area 208 configured for handling the coupon 200 by a robotic handling unit 104 of apparatus 100. In order to avoid collisions between handling and testing, handling area 208 may be free of test targets 116 for the quality test. Advantageously, the coupon design unit 276 may be configured for designing the coupon 200 so that the handling area 208 is provided in corresponding regions on both opposing main surfaces of a base plate 202 of the coupon 200. Furthermore, the coupon design unit 276 may be configured for designing the coupon 200 with a test area 212 being located apart from the handling area 208 and comprising test targets 116 for the quality test, as shown in Figure 6 to Figure 8.

Also an automatic identification of the designed coupon 200 may be advantageous for its fully automated processing during quality testing. For this purpose, the coupon design unit 276 is configured for designing the coupon 200 with an identifier 126 configured for identifying the coupon 200 and/or the related component carriers 256. The coupon design unit 276 may ensure that no two coupons 200 have the same identifier 126, so that each coupon 200 may have a unique identifier.

For supporting automatic alignment of a coupon 200 by apparatus 100, the coupon design unit 276 may be configured for designing the coupon 200 with one or more alignment structures 216 which are preferably embodied as alignment through holes and shown in Figure 6 and Figure 7.

By configuring the coupon design unit 276 for designing the coupon 200 with a mechanical coding feature 230, as shown in Figure 7 and Figure 8 as well, it may be possible to disable any erroneous insertion of the coupon 200 into an apparatus 100 for carrying out the quality test. This may render the automatic quality test highly failure robust and promotes automation.

Beyond this, the coupon design unit 276 may be configured for designing the coupon 200 with a sacrificial structure 224 for monitoring progress of a material removal process for exposing test targets 116, as described in detail referring to Figure 8. Also this promotes a fully automatic handling of coupon 200.

Highly preferably, the coupon design unit 276 may also be configured for virtually designing the coupon 200 with multiple integrally connected and functionally separate coupon sections 226, each configured for being individually usable for a quality test by an automated apparatus 100, see Figure 7. Also this modular character of the designed coupon 200 contributes to its pronounced suitability for integration in a fully automated quality test.

A data set (indicated with reference sign 290 in Figure 5), characterizing the designed coupon 200 may be forwarded to an output unit 278. Said data set may be configured for providing output data indicative of the designed coupon 200 fulfilling said compliance conditions and/or said properties of the component carriers 256 and/or having at least some of the properties of the initial coupon design. From output unit 278, such a data set may be presented to a user via user interface 286. It is also possible that a data set is a coupon design defined by a user (such as a customer), which is to be tested concerning compliance (in particular with respect to one or more industrial standards and/or with respect to features of a corresponding component carrier).

Various functional blocks shown in Figure 4 may be integrated in one or multiple processors 284.

**Figure 5** illustrates a schematic diagram showing a process of designing a coupon 200 for carrying out a quality test concerning coupon-related component carriers 256 according to an exemplary embodiment of the invention.

As an input (which may be supplied by a user interface 286), a test standard (compare compliance input unit 272), a user product design (compare product input unit 274), and data relating to an already existing test coupon (see initial coupon input unit 282) may be supplied to a processor 284 (which may fulfill the functions of coupon design unit 276 and an optional collision determining unit 280) for building and/or verification of a coupon 200. A result of the processing by processor 284 is an approved test coupon 200, described in terms of its manufacturability by a data set 290.

**Figure 6** illustrates a plan view of a coupon 200 for a fully automated quality test apparatus 100 designed according to Figure 4 and Figure 5. Coupon 200 can be manufactured based on a data set 290 describing a designed coupon 200 and created by system 270 described referring to Figure 4 and Figure 5.

Before describing the properties of the coupon 200 and its cooperation with the apparatus 100 in further detail, reference is made to a panel 250 which is illustrated in a plan view in Figure 6 is well. A central portion 252 of the panel 250 comprises a plurality of component carriers 256, which may for instance be arranged in a matrix like pattern. For example, the component carriers 256 may be printed circuit boards (PCBs) or integrated circuit (IC) substrates. An edge portion 254 of the panel 250 comprises the above-mentioned coupon 200. The component carriers 256 have been manufactured on panel level and in a batch process together with the coupon 200 and are still integrally connected with the coupon 200 as integral parts of the panel 250. Since coupon 200 and component carriers 256 have been manufactured together it can be reasonably assumed that the coupon 200 and the component carriers 256 have similar properties in terms of quality. Hence, a quality test carried out for the coupon 200 may also be indicative of a quality of the component carriers 256.

For execution of a quality test for determining quality information concerning the component carriers 256, the coupon 200 may be separated from panel 250. Thereafter, the coupon 200 may be handed by a robotic handling unit 104 by gripping the coupon 200 at its handling area 208. Thereafter, the coupon 200 may be tested based on its test targets 116, for instance in a way as described above referring to Figure 1 to Figure 3.

Due to the construction of the coupon 200, as described in the following, the coupon 200 is rendered compatible with a fully automated quality test carried out by automated quality test apparatus 100.

For this purpose, the coupon 200 comprises a flat planar base plate 202 which may have a substantially rectangular shape. As the component carriers 256, also the base plate 202 may be configured as a laminated layer stack of electrically conductive layer structures 204 and electrically insulating layer structures 206. Lamination may particularly denote the connection of the layer structures 204, 206 by the application of pressure and/or heat. For example, the electrically conductive layer structures 204 may comprise patterned copper foils and vertical through-connections, for example copper filled laser vias which may be created by laser drilling and plating. The electrically insulating layer structures 206 may comprise a respective resin (such as a respective epoxy resin), optionally comprising reinforcing particles therein (for instance glass fibers or glass spheres). For instance, the electrically insulating layer structures 206 may be made of prepreg or FR4.

Again referring to Figure 6, the coupon 200 comprises the already mentioned handling area 208 on a first portion of the surface of the base plate 202. The handling area 208 is configured for handling the coupon 200 by robotic handling unit 104 (see Figure 2 and Figure 3) and is free of test targets 116 which may be detected, determined and evaluated during execution of the quality test. Furthermore, the coupon 200 comprises a test area 212 on and in a second portion of the base plate 202 which comprises test targets 116 used for the quality test. As shown, the handling area 208 and the test area 212 are separate non-overlapping areas of the coupon 200. By spatially separating the functional regions of the coupon 200 relating to robotic handling and relating to quality testing based on the test targets 116, it can be ensured that the coupon 200 can be handled fully automatically without compromising the quality test.

In the shown embodiment, the handling area 208 or gripping area is a continuous rectangular surface portion of the coupon 200 being entirely free of any features apart from providing a gripping surface for the handling unit 104 of the apparatus 100. The handling area 208 is configured as a flat area to be gripped by robotic handling unit 104. For instance, the handling area 208 may be a surface portion of the base plate 202 corresponding to at least 10% of the entire area of the illustrated main surface of the coupon 200. For instance, the handling area 208 may correspond to a percentage of the entire area of said main surface of the coupon 200 in a range from 5% to 20%, in particular in a range from 10% to 15%. The handling area 208 should be sufficiently large to allow proper robotic handling of the coupon 200 at the handling area 208, and should be sufficiently small to provide enough space for test targets 116 and other functional features of the coupon 200. In one embodiment, the handling area 208 has a higher roughness Ra or Rz than the remaining surface portion of the coupon 200 for simplifying automated handling of the coupon 200 by improving grip. Although not shown in Figure 6, a handling area 208 with the described properties may be provided on both opposing main surfaces of the base plate 202 at corresponding positions or in corresponding regions. This enables gripping of the coupon 200 by robotic handling unit 104 of the apparatus 100 from both opposing sides. In particular, the robot 120 may handle the coupon 200 by clamping.

Optional but advantageous tooling holes 211 may be arranged adjacent to the handling area 208 and may contribute to a proper handling of the coupon 200 as well.

As described referring to Figure 2 and Figure 3, the quality test apparatus 100 may comprise a material removal unit 112 configured for removing material of the coupon 200 for exposing one or more of the test targets 116 in an interior of the coupon 200 to be subjected to the quality test. In particular, said material removal may be embodied as cross-sectional grinding for exposing an interior surface plane of interest of the coupon 200 showing cross-sections of test targets 116. In view of the spatial separation of handling area 208 and test area 212 due to the illustrated design of the coupon 200, material removal is not disturbed at all by the handling area 208 and even allows holding the coupon 200 by a robot 120 of the handling unit 104 during grinding.

As shown as well in Figure 6, coupon 200 comprises an identifier 126 on the base plate 202. The identifier 126 is configured for identifying (preferably uniquely identifying) the coupon 200. The identity of the coupon 200 may also be indicative of an identity of the related component carriers 256 (wherein a correlation between an identity of the coupon 200 and an identity of the component carriers 256 may for instance be made via data sets stored in database 128). In the shown embodiment, the identifier 126 is a QR code. Correspondingly, the apparatus 100 cooperating with the coupon 200 may comprise an identification unit 110 in form of a QR code reader. The identification unit 110 may be configured for identifying the coupon 200 based on identification information derived from the identifier 126 of the coupon 200, i.e. by reading out said QR code. In the shown embodiment, the QR code is a patterned copper layer of the outermost electrically conductive layer structure 204. Hence, creating the QR code on coupon 200 may be carried out simultaneously with the creation of electrically conductive traces of the component carriers 256 of panel 250, and therefore does not involve any extra effort. However, the code can also be applied differently (for instance using a selective coating, a sticker, etc.) in a separate process. Preferably, however, the QR code is a patterned conductive layer.

As shown, the identifier 126 is preferably arranged directly next to the handling area 208 or even directly on the handling area 208 (if a handling device has an integrated code detection unit). The identifier 126 may also be arranged in a central area surrounded by the handling area 208. This has the advantage that a robot 120 of handling unit 104 gripping and handling coupon 200 may simultaneously read out the identifier 126 during handling coupon 200 when arranging a reader of the identification unit 110 on a robot arm of the handling unit 104. Parallelization of handling and identification may accelerate the quality test.

The illustrated test targets 116 comprise sequences of test holes 220 filled with electrically conductive material, preferably copper. The shown sequences of test holes 220 comprise sets of test holes 220 of different dimensions, sets of test holes 220 of identical dimensions, and sets of test holes 220 arranged along a straight line and therefore lying in a common cross-sectional plane. Hence, multiple drill hole dimensions may be analysed in a single cross-sectional plane of the coupon 200. When removing material from the left hand side and/or from the right-hand side of the coupon 200 illustrated in Figure 6 during grinding by material removal unit 112, cross-sections of the test holes 220 may be exposed which may be analysed in terms of quality. Due to the arrangement of the handling area 208 between sections of the test area 212, quality testing (which may involve material removal, as described) will not be influenced by handling. Furthermore, robotic handling of the coupon 200 is still possible while material of the coupon 200 is removed. Correspondingly, since the identifier 126 is arranged between sections of the test area 212, the identifier 126 will not be influenced by the material removal during quality testing and remains part of the coupon 200 even after completing the quality test. If a lot of material needs to be removed on either side, it may even be preferred that the identification code structure or identifier 126 is located at the handling area 208 in order not to occupy space that needs to or could be removed during the material removal process.

As shown in Figure 6, an outline of the base plate 202 constitutes an outline of the entire coupon 200. Hence, the coupon 200 is very compact and consumes only a low amount of material. However, referring to Figure 2, it may be alternatively possible that the base plate 202 of the coupon 200 is at least partially surrounded by an encapsulant 146, in particular made of resin.

**Figure 7** illustrates a coupon 200 comprising multiple integrally connected coupon section 226 designed according to Figure 4 and Figure 5.

Hence, the coupon 200 of Figure 7 comprises a plurality of integrally connected and functionally separate coupon sections 226 connected to each other along a straight direction which corresponds to the horizontal direction of Figure 7. Each coupon section 226 comprises an assigned handling area 208 and an assigned test area 212, as described referring to Figure 6. As shown, adjacent ones of the coupon sections 226 are connected with each other at a respective predetermined breakage point 228. The latter may be embodied as breaking edges in form of a mechanically weakened, thinned or perforated line in the base plate 202. Thus, if only one coupon section 226 is sufficient for a quality test, it may be possible to separate one of the coupon sections 226 from the entire coupon 200, for instance by manually breaking it along a respective breaking edge. If two adjacent coupon sections 226 are needed for a quality test, it may be possible to separate these two coupon sections 226 from the entire coupon 200, for instance by manually breaking them along another breaking edge. The separated coupon section(s) 226 may then be inserted into a magazine (see for instance inlet accommodation unit 136 in Figure 2) and may be fully automatically quality tested by apparatus 100. Carrying out the quality test only on the basis of one or several coupon sections 226 (rather than using the entire coupon 200) may save resources of the panel 250 and may allow to increase the yield. For instance, an individual coupon section 226 may have a length, I, in a range from 20 mm to 40 mm (for example 30 mm). Furthermore, an individual coupon section 226 may have a width, w, in a range from 10 mm to 20 mm (for example 15 mm). For example, a coupon section 226 may be embodied as coupon 200 of Figure 6. The shown modular arrangement of coupon sections 226 makes clear that with such a modular approach, a high flexibility can be combined with a resource saving architecture.

As can be taken from a detail 213 in Figure 7, the base plate 202 (or even each coupon section 226) may be provided with a single mechanical coding feature 230, which is here embodied as a chamfered corner 230 of the substantially rectangular base plate 202. The mechanical coding feature 230 may serve for defining an insertion orientation for inserting the coupon 200 into inlet accommodation unit 136 (see Figure 2) of apparatus 100 for carrying out the quality test. The illustrated mechanical coding feature 230 may be used as a mechanical code ensuring a correct accommodation of the coupon 200 or coupon section(s) 226 in a correspondingly shaped accommodation volume of accommodation inlet unit 136 of the automated quality test apparatus 100. When a user tries to insert the coupon 200 with an incorrect orientation into the accommodation inlet unit 136, this may be disabled by the mechanical code in form of mechanical coding feature 230. Hence, mechanical coding feature 230 ensures proper processability of the coupon 200 by the fully automatic apparatus 100.

Furthermore, the coupon 200 of Figure 7 comprises a plurality of alignment structures 216 which are here embodied as alignment through holes. Said alignment structures 216 are arranged in corner regions/corners 218 of the base plate 202. The copper free alignment structures 216, being realized as reference through holes extending entirely through base plate 202, enable alignment by an optical camera of apparatus 100. Such an alignment may be advantageous during material removal and/or during polishing and/or image detection.

Still referring to Figure 7, the test targets 116 of each coupon section 226 are arranged along two parallel straight lines along two opposing edge portions 222 of the base plate 202. In contrast to the alignment structures 216 embodied as through holes, the test targets 116 are filled with copper, for instance are embodied as copper filled vias. By providing two parallel rows of test targets 116, one set of test targets 16 is provided as a backup introducing redundancy.

Also in the embodiment of Figure 7, each coupon section 226 may be provided with an assigned identifier 126 which can be a Unique Data Matrix Code printed during production of the panel 250. Therefore, the identifier 126 may be embodied as a patterned copper layer and may thus be manufactured with low effort and low space consumption.

In an embodiment, the coupon structure can be adjusted according to needs and/or features manufactured on a panel. Also, the coupon can be located centrally or on sides or edges of a panel or a frame.

**Figure 8** illustrates a coupon 200 designed according to Figure 4 and Figure 5.

According to Figure 8, the base plate 202 as provided with a mechanical coding feature 230 as mechanical code ensuring proper orientation of the coupon 200 when inserted into apparatus 100. In the shown embodiment, the mechanical coding feature 230 is embodied as a slanted edge of the - apart from this - substantially rectangular base plate 202.

Moreover, coupon 200 of Figure 8 comprises an electrically conductive sacrificial structure 224 which may for instance be embodied as a metal insert in base plate 202. Sacrificial structure 224 may be used for progress control of a material removal unit 112 such as a grinding tool during grinding coupon 200. For this purpose, electrodes (not shown) of apparatus 100 may be connected with electrically conductive sacrificial structure 224 during material removal from the right hand side of Figure 8. At the beginning, the electrodes can measure an electric signal at electrically conductive sacrificial structure 224. When sacrificial structure 224 is removed during the material removal, the electric signal changes and finally vanishes when sacrificial structure 224 is entirely removed. This event corresponds to a scenario in which the material removal has exposed centers 225 of metal filled through holes constituting test targets 116. Thus, loss of the electric signal detected at sacrificial structure 224 may be used as a trigger to switch off material removal unit 112, since a desired target position concerning the cross-sectional view of the test targets 116 has been reached. Hence, sacrificial structure 222 may be intentionally removed during removing material of the coupon 200 for exposing the test targets 116. Consequently, sacrificial structure 224 can be used for detecting a progress of the material removal up to a target exposure of the test targets 116, since the sacrificial structure 224 is arranged so that it is fully removed during removing material of the coupon 200 when the centers 225 of the test holes 220 are reached. Alternatively, measuring the remaining resistance of the sacrificial structure 222 during material removal may also be used as a basis for progress control.

A further option is to visually measure the material removal process by a continuous visual analysis or stepwise (for instance carrying out a sequence: grinding - checking - grinding - checking, and so on).

It should be noted that the term "comprising" does not exclude other elements or steps and the "a" or "an" does not exclude a plurality. Also, elements described in association with different embodiments may be combined.

It should also be noted that reference signs in the claims shall not be construed as limiting the scope of the claims.

Implementation of the invention is not limited to the preferred embodiments shown in the figures and described above. Instead, a multiplicity of variants is possible which use the solutions shown and the principle according to the invention even in the case of fundamentally different embodiments.

## Claims

1. A computer-implemented system (270) for designing a coupon (200) for carrying out a quality test concerning coupon-related component carriers (256), wherein the system (270) comprises:
a compliance input unit (272) configured for receiving compliance input data indicative of compliance conditions to be fulfilled by the coupon (200) to be designed;
a product input unit (274) configured for receiving product input data indicative of properties of component carriers (256) to be manufactured to which the coupon (200) to be designed is related; and
a coupon design unit (276) configured for designing the coupon (200) so as to fulfil said compliance conditions and/or said properties of the component carriers (256).

2. The system (270) according to claim 1, comprising an output unit (278) configured for providing output data indicative of the designed coupon (200) fulfilling said compliance conditions and/or said properties of the component carriers (256).

3. The system (270) according to claim 1 or 2, wherein the compliance input unit (272) is configured for receiving compliance input data indicative of compliance conditions in terms of at least one industrial standard, in particular at least one of IPC-6012 and IPC-A-600.

4. The system (270) according to any of claims 1 to 3, wherein the compliance input unit (272) is configured for receiving compliance input data indicative of user-defined compliance conditions.

5. The system (270) according to any of claims 1 to 4, comprising a collision determining unit (280) configured for determining a collision between compliance conditions in terms of at least one industrial standard and user-defined compliance conditions.

6. The system (270) according to claim 5, comprising at least one of the following features:
wherein the collision determining unit (280) is configured for, upon determining said collision, requesting a user to indicate whether the compliance conditions in terms of the at least one industrial standard or the user-defined compliance conditions shall have precedence for designing the coupon (200);
wherein the collision determining unit (280) is configured for, upon determining said collision, proposing modified compliance rules for designing the coupon (200), in particular modified compliance rules removing the collision between the compliance conditions in terms of the at least one industrial standard and the user-defined compliance conditions.

7. The system (270) according to any of claims 1 to 6, wherein the product input unit (274) is configured for receiving product input data indicative of at least one of the group consisting of a diameter (D) of a bore hole, a distance (L) between adjacent bore holes, and a thickness (d) of a layer structure, of the component carriers (256) to be manufactured.

8. The system (270) according to any of claims 1 to 7,
comprising an initial coupon input unit (282) configured for receiving information indicative of an initial coupon design;
wherein the coupon design unit (276) is configured for verifying whether the initial coupon design fulfils said compliance conditions and/or said properties of the component carriers (256).

9. The system (270) according to any of claims 1 to 8, wherein the coupon design unit (276) is configured for designing the coupon (200) in accordance with at least one boundary condition relating to Good Manufacturing Practice.

10. The system (270) according to any of claims 1 to 9, comprising at least one of the following features:
wherein the coupon design unit (276) is configured for designing the coupon (200) to be compatible with a quality test of the coupon (200) carried out by a fully automated apparatus (100);
wherein the coupon design unit (276) is configured for designing the coupon (200) with a handling area (208) configured for handling the coupon (200) by a robotic handling unit (104) and being free of test targets (116) to be used for the quality test;
wherein the coupon design unit (276) is configured for designing the coupon (200) with a test area (212) comprising test targets (116) for the quality test;
wherein the coupon design unit (276) is configured for designing the coupon (200) with an identifier (126) configured for identifying the coupon (200) and/or the coupon-related component carriers (256);
wherein the coupon design unit (276) is configured for designing the coupon (200) with one or more alignment structures (216);
wherein the coupon design unit (276) is configured for designing the coupon (200) with a mechanical coding feature (230), in particular a slanted corner or edge of the substantially rectangular coupon (200), for disabling erroneous insertion into an apparatus (100) for carrying out the quality test;
wherein the coupon design unit (276) is configured for designing the coupon (200) with at least one sacrificial structure (224), in particular at least one electrically conductive sacrificial structure, to be at least partially removed during removing material of the coupon (200) for exposing at least one test target (116), wherein the at least one sacrificial structure (224) is configured to be used for detecting a progress of the material removal up to a target exposure of the at least one test target (116);
wherein the coupon design unit (276) is configured for designing the coupon (200) with multiple integrally connected and functionally separate coupon sections (226), each configured for being individually separable and usable for a quality test by an automated apparatus (100).

11. A computer-implemented method of designing a coupon (200) for carrying out a quality test concerning coupon-related component carriers (256), wherein the method comprises:
receiving compliance input data indicative of compliance conditions to be fulfilled by the coupon (200) to be designed;
receiving product input data indicative of properties of component carriers (256) to be manufactured to which the coupon (200) to be designed is related; and
designing the coupon (200) so as to fulfil said compliance conditions and/or said properties of the component carriers (256).

12. A computer-readable medium, in which a computer program of designing a coupon (200) for carrying out a quality test concerning coupon-related component carriers (256) is stored, which computer program, when being executed by one or a plurality of processors (284), is adapted to carry out and/or control a method according to claim 11.

13. A program element of designing a coupon (200) for carrying out a quality test concerning coupon-related component carriers (256), which program element, when being executed by one or a plurality of processors (284), is adapted to carry out and/or control a method according to claim 11.

14. A method of carrying out a quality test concerning component carriers (256), wherein the method comprises:
carrying out a method according to claim 11 for designing a coupon (200) for carrying out the quality test concerning the coupon-related component carriers (256);
processing a central portion (252) of a panel (250) for manufacturing the component carriers (256);
processing an edge portion (254) of the panel (250) for manufacturing the coupon (200) designed by the method according to claim 11; and
testing the coupon (200) for carrying out the quality test concerning the component carriers (256).

15. The method according to claim 14, wherein the method comprises testing the coupon (200) by an automated apparatus (100) without human intervention.
